# EUROPÄISCHE PATENTSCHRIFT

(11) **EP 0 981 660 B1**
(45) Veröffentlichungstag und Bekanntmachung des Hinweises auf die Patenterteilung: **22.01.2003**
(21) Anmeldenummer: 98928239.7
(22) Anmeldetag: 11.05.1998
(51) Int. Cl.: D03D 3/02, D03D 3/06

(54) **GEWEBE MIT VERÄNDERLICHER BREITE**
FABRIC WITH A VARIABLE WIDTH
TISSU A LARGEUR VARIABLE

(30) Priorität: 11.05.1997 DE 19719218; 27.03.1998 DE 19813630
(43) Veröffentlichungstag der Anmeldung: 01.03.2000
(73) Patentinhaber: Büsgen, Alexander, 42285 Wuppertal (DE)
(72) Erfinder: Büsgen, Alexander, 42285 Wuppertal (DE)
(74) Vertreter: von Kreisler, Alek, Dipl.-Chem.
(86) Internationale Anmeldenummer: EP9802736
(87) Internationale Veröffentlichungsnummer: WO98051845

(56) Entgegenhaltungen:
- EP-A- 0 145 615
- EP-A- 0 431 664
- DE-A- 2 321 612
- DE-A- 3 915 085
- FR-A- 1 490 531
- FR-A- 2 213 363
- GB-A- 943 062
- GB-A- 2 309 038
- JP-A- 7 238 433
- US-A- 2 974 687
- US-A- 4 025 684

## Beschreibung

Die Erfindung betrifft ein Webverfahren sowie eine Maschine zur Herstellung eines Gewebes mit veränderlicher Breite.

Durch die JP 7-238433 ist ein gewebter Schlauch bekannt, dessen Durchmesser sich über die Länge dadurch ändert, daß in Kettrichtung Schußfäden unterschiedlicher Elastizität eingetragen werden.

Gewebe können sowohl als zweidimensionale, einlagige Fläche als auch in Form von mehrlagigen, dickeren Strukturen hergestellt werden. Gewebte Schläuche mit über die Länge variablem Durchmesser waren bisher nicht nahtlos herstellbar, da die bekannten Verfahren zur Änderung der Gewebebreite hierbei nicht anwendbar sind.

Eine Möglichkeit der Veränderung der Gewebebreite ist die Verdichtung bzw. Spreizung der Kettfäden. Die Gesamtanzahl der Kettfäden bleibt dabei im Gewebe konstant. Dabei ändert sich zwar die Gewebebreite und damit gegebenenfalls der Durchmesser eines gewebten Hohlraumes; der Spreizung wie auch der Einschnürung des seitlichen Kettfaden-Abstandes wirkt jedoch die Kettfadenspannung, der Schußeintrag und die Schußfadenspannung entgegen, die unvermeidlich und aus anderen Gründen auch erwünscht ist. Spreizung wie auch Einschnürung sind daher nicht stabil und gehen weitgehend schon beim Weben wieder verloren. Daher ist eine vorgegebene Breitenänderung nicht ohne weiteres durchführbar.

Ein Webverfahren gemäß dem Oberbegriff des Anspruchs 1 und Webmaschinen gemäß den Oberbegriffen der Ansprüche 17 bis 19 sind aus EP-A-0 145 615 bekannt.

Aufgabe der Erfindung ist es, das Webverfahren und die Webmaschine so auszugestalten, daß ein stabiles Gewebe aus Fäden ,insbesondere Schußfäden mit

einheitlicher Elastizität und Dehnbarkeit mit über die Gewebelänge variabler Breite, insbesondere ein schlauchförmiges Gewebe, dessen Durchmesser sich über die Länge ändert, herstellbar ist, und daß auch pro Längeneinheit sehr starke Breitenänderungen durchgeführt werden können. Die Durchmesseränderung soll nicht durch die Elastizität und Dehnbarkeit der Fäden sondern durch das Webverfahren selbst hervorgerufen werden.

Die Lösung nach Anspruch 1 hat den Vorteil, daß die an sich bekannte und übliche Breithaltung des Gewebes hier aktiv zur Anpassung der seitlichen Kettfadenposition sowie Schußfaden-Ablage und -Spannung an die Gewebebreite eingesetzt wird. Es lassen sich damit stark konische Vergrößerungen oder Verkleinerungen der Gewebebreite erzielen, die sich der Gewebestruktur bleibend einprägen und darin verfestigt werden.

Als Breithalter sind bekannte Einrichtungen bezeichnet, die eine Breitführungswirkung auf das Gewebe ausüben.

Besonders wirksam sind Breithalter nach Anspruch 2. Es sind Breithalter, die nur an den Geweberändern angeordnet sind. Dabei handelt es sich z.B. um nadelbesetzte kreiszylindrische Walzen, die im Bereich des Geweberandes frei drehbar angeordnet sind. Über diese Walzen wird der Geweberand bei teilweiser Umschlingung geführt. Die Stirnseiten der Walzen liegen vorzugsweise parallel zu einander, jedoch geneigt zu einer Radialebene der Walzen. Es ergibt sich dadurch eine Förderwirkung nach außen. Diese Walzen werden erfindungsgemäß, bezogen auf die Gewebebreite, synchron und im wesentlichen proportional zur Spreizung bzw. Einschnürung der Kettfadenabstände nach außen oder innen verlagert. (Anspruch 2)

Es sind ferner Breithalter in Form nicht drehender oder drehender Stäbe bekannt, die sich über die Breite des Gewebes erstrecken. Es handelt sich z.B. um Stäbe, die auf ihrem vom Gewebe berührten Umfang Rillen aufweisen, die, in Entstehungsrichtung des Gewebes, nach außen weisen.

Anspruch 3 enthält die Anpassung dieser maschinell sehr einfachen Breithalter an die Erfindung.

Bei der Herstellung von Geweben mit sich ändernder Breite hängt die engste Einschnürung von der größt-möglichen Kettfadendichte ab. Bei Spreizung einer solchen Kettfadenschar besteht das Problem, daß sich die Kettfäden nicht gleichmäßig über die aufgespreizte Gewebebreite verteilen. Dieses Problem löst das Webverfahren nach Anspruch 4. Dabei werden zwei oder mehr unmittelbar benachbarte Kettfäden ohne gegenseitige Abbindung geführt wie dies z.B.: bei einer Längsripsbindung mit 4 Ketthochgängen und 4 Kettiefgängen ist. Eine solche Bindung hat hier den Vorteil, daß die Reibung zwischen den Kettfäden und den Schußfäden gering ist, so daß sich die Kettfäden auch nach dem Schußeintrag durch ihre Eigenspannung noch über die Gewebebreite gleichmäßig verteilen können.

Eine besondere Form des Gewebes ist das Rund- oder Schlauchgewebe. Ein Schlauch wird z.B. dadurch gewebt, daß zwei Gewebeschichten übereinanderliegend hergestellt werden, die nur in den Randbereichen miteinander verbunden sind.

Alle Verfahren zum Weben von schlauchähnlichen Strukturen erzeugen eine konstante Gewebebreite. Der Durchmesser des gewebten Hohlraumes, meistens des gewebten Schlauches, ist damit konstant. In vielen Anwendungsfällen wird aber ein hohlraumbildendes Gewebe gewünscht, das einen sich mehr oder weniger stark verjüngenden Durchmesser oder eine konstante Konizität zwischen zwei unterschiedlichen Durchmessern bzw. Breiten aufweist. Beispiele hierzu sind Faserverstärkungen für Masten (Segel- und Surfmasten, Stützpfeiler), die im oberen Bereich einen kleinen und bis zum Fuß allmählich einen dickeren Durchmesser besitzen. Andere Beispiele sind Golfschläger und viele Leichtbau-Stäbe und Tragarme in der Industrie.

Konisch zulaufende Hohlraumstrukturen können bisher nur durch das Wickelverfahren oder durch das Flechtverfahren erzeugt werden. Das Wickelverfahren ist sehr zeitaufwendig und durch die Gefahr abrutschender Fäden an dem bewickelten Kern eingeschränkt. Das Flechtverfahren kann keine Fäden in Umfangsrichtung eines Schlauches ablegen und ist somit auf torsionsbeanspruchte Anwendungen eingeschränkt.

Die Weiterbildungen der Erfindung nach Anspruch 5 bis 13 haben das Ziel, eine gewebte Struktur nach den Ansprüchen 21-25 herzustellen, die einen Hohlraum bildet, z.B. schlauchähnlich, deren Fäden in Axial- und in Umfangsrichtung verlaufen, und deren Hohlraum sich in Richtung der Kettfäden vergrößert oder verkleinert.

Für die Ausführung nach Anspruch 5 beziehungsweise 22 ist besonders die Schützenwebtechnik vorteilhaft, da der Schußfaden dabei ungeschnitten abwechselnd die obere und die untere Gewebelage abbindet und somit keine Nahtstelle am Umfang des gewebten Schlauches entsteht.

Wenn Nadelbandwebautomaten eingesetzt werden, muß der Schußfaden an einem Ende des Gewebes durch eine Häkelkante festgehalten werden, was eine mehr oder weniger ausgeprägte Wulst in Kettrichtung zur Folge hat (Anspruch 11 beziehungsweise 23).

Auch die Verwendung von modernen leistungsfähigen Greifer-Webmaschinen wird ermöglicht mit der gleichzeitigen Herstellung einer Mehrzahl von Bändern oder Schläuchen mit variabler Breite beziehungsweise variablem Durchmesser mit der Weiterbildung nach Anspruch 6 und 7 insbesondere in Verbindung mit Anspruch 9 für Produkte nach Anspruch 24. Anspruch 8 erlaubt die materialsparende Herstellung mehrerer Bänder beziehungsweise Schläuche mit variabler Breite/variablem Durchmesser. Mit der Ausführung nach Anspruch 12 wird der Nahtbereich des Schlauches verstärkt, so daß der Schlauch im Inneren auch mit hohen Drücken beaufschlagt werden kann.

Die Ausbildung der Erfindung nach Anspruch 13 gestattet es, Bänder oder Schläuche herzustellen, die einerseits bei veränderlicher Breite beziehungsweise bei veränderlichem Durchmesser andererseits über ihre Länge auch gekrümmt sind. Es können hierfür z.B. konische Abzugswalzen eingesetzt werden. Vorteilhaft ist aber insbesondere der Einsatz von in Segmente zerlegten Abzugswalzen, bei denen jedes Segment einen oder eine Gruppe von Kettfäden fördern und bei denen die einzelnen Segmente mit steuerbarer, von Segment zu Segment unterschiedlicher Geschwindigkeit angetrieben werden können. Insoweit wir auf das DE-C-39 15 085 verwiesen.

Die Ausbildung der Erfindung nach Anspruch 13 gestattet es, die Anzahl der Kettfäden pro Breiteneinheit durch bindungstechnische Herausnahme beziehungsweise die Hinzunahme von Kettfäden in die Bindung auszugleichen.

Einzelne oder Gruppen von Kettfäden können zeitweise in der Hoch- oder Tieffachstellung verbleiben, während die übrigen Kettfäden verwebt und eingebunden werden. Diese Fäden flottieren damit zeitweilig. An solchen Stellen, wo diese Fäden wieder in das Gewebe eingebunden werden, entsteht eine Tendenz zur Vergrößerung der Gewebebreite und beziehungsweise des gewebten Hohlraums oder Schlauchdurchmessers. Vorteilhaft hierzu ist die Verwendung einer Jacquardmaschine mit Einzelfadensteuerung.

Sehr steile Änderungen der Gewebebreite werden bei dem Webverfahren nach Anspruch 15 ermöglicht. Die Steigerung der Schußfadenspannung führt zu einem Zusammenziehen der Kettfäden und ebenfalls zu einer veränderten Gewebebreite. Vorteilhaft hierzu ist eine steuerbare Schußfadenbremse, die zu bestimmten Zeitpunkten den Schußfaden mehr und zu anderen Zeitpunkten weniger bremst.

Die Spreizung oder Einschnürung des Kettfaden-Abstandes geschieht vorteilhaft durch ein Riet mit variablem Stababstand (Anspruch 16). Dabei können die Rietstäbe in dem Rietrahmen seitlich bewegbar sein. Die seitliche Verschiebung kann passiv, d.h. ohne weiteren Antrieb den Kettfäden den benötigten Raum geben. Es kann aber auch eine aktiv wirkende Verstellung durch Antrieb eingesetzt werden, der die Rietstäbe beziehungsweise Kettfäden seitlich führt und positioniert.

Oder es findet ein Fächerwebblatt mit nicht-parallelen Rietstäbe Anwendung, dessen Rietstäbe fächerförmig in senkrechter Richtung auseinanderstreben, und das höhenverstellbar ist. Beide Ausführungen von Rieten sind z.B. in der DE 39 15 085 A1 beschrieben und dargestellt.

Der Verminderung der Fadenreibung und -schädigung bei starker Spreizung oder Einschnürung des Kettfaden-Abstands dient die Ausbildung der Rietstäbe nach Anspruch 17 oder 18.

Bei Verwendung eines Riets mit seitlich verstellbaren Rietstäben oder vertikal verstellbaren Webriets mit nichtparallelen, z.B. fächerförmig angeordneten Rietstäben ist zu berücksichtigen, daß im Bereich der größten Einschnürung nicht soviele Rietstäbe über die geringste Gewebebreite untergebracht werden können, wie zur Führung der Kettfäden erforderlich ist. Es müssen also zwischen zwei Rietstäben eine für die ordentliche Führung zu große Zahl von Kettfäden eingezogen werden. Im Höhenbereich mit vergrößerten Abstand d.h. großer Fadenspreizung fehlt eine ausreichende seitliche Führung, so daß sodann die gleichmäßige Verteilung der Fäden zum Problem wird. Dieses Problem wird durch Anspruch 19 und Anspruch 20 gelöst.

Dabei sind zwischen den Rietstäben zusätzliche Führungsstäbe angeordnet. Die Kettfäden werden in gleichmäßiger Verteilung sowohl in die Abstände (Hauptöffnungen) zwischen den Haupt-Rietstäben als auch in die Abstände (Zusatz-Öffnungen) zwischen den Zusatz-Rietstäben eingezogen. Die Führungsstäbe sind im Bereich der Einschnürung neutral, d.h. führen die Kettfäden beim Schußanschlag nicht. Im Bereich der Spreizung treten sie jedoch in die Hauptöffnungen und dienen der im wesentlichen gleichmäßig Verteilung der hier untergebrachten Kettfäden.

Die zusätzlichen Führungsstäbe können an dem Riet angebracht sein oder die Rietstäbe eines zusätzlichen Riets (Zusatz-Riet) sein. Es ist auch möglich, diese beiden Riete identisch auszuführen und das zusätzliche Riet in der die Spreizung bewirkenden Höhenstellung geringfügig , d.h. weniger als eine Rietsabteilung (Öffnungsbreite) seitlich zu versetzen.

Das nach dieser Erfindung aus Kett- und Schußfäden gewebte schlauchförmige Gewebe bildet aus zwei übereinanderliegenden Gewebeschichten, einen Hohlraum, der unter Innendruck einen im wesentlichen kreisförmigen Querschnitt einnimmt, wobei sich der Durchmesser über die Länge des Gewebeschlauches ändert. Dabei wird nach dieser Erfindung erreicht, daß die aufeinander liegenden Gewebeschichten so fest mit einander verbunden sind, daß die Gewebeschläuche auch hohen Innendrücken standhalten, welche an den Rändern nahtlos durch den endlos eingebundenen Schußfaden in einander übergehen, einen nahtlosen Hohlraum mit veränderlicher Breite beziehungsweise veränderlichem Durchmesser, wobei die Gewebeschichten im Bereich des Hohlraumes nicht miteinander verbundenen sind.

Hierfür ist die konventionelle Schützenwebtechnik besonders vorteilhaft. Diese Webtechnik befördert die ganze Schußspule durch das Webfach und bildet dadurch eine sogenannte "echte" Kante; d.h. der Schußfaden ist an der Kante nicht durchtrennt sondern wird umgelegt und in das folgende Fach eingetragen. Verschiedene Bindungen wie z.B. die Leinwand-Hohlbindung nützen diesen Umstand aus. Der Schußfaden wird dort abwechselnd in einer oberen und einer unteren Gewebeschicht eingetragen. Das fertige Gewebe hat damit eine schlauchähnliche Struktur ohne Nahtstelle, da die Oberlage an der Kante ohne Unterbrechung in die untere Lage übergeht. Kombiniert man diese Art der Hohlraumerzeugung mit der vorgeschlagenen Breitenvariationen, so erhält man einen nahtlosen gewebten Schlauch mit unterschiedlichen Durchmessern.

Schlauchförmiges Gewebe und insbesondere solche variablen Durchmessers lassen sich im aufgeblasenene Zustand nicht krümmen beziehungsweise im gekrümmten Zustand nicht aufblasen. Das Verfahren nach Anspruch 13 schafft die Möglichkeit, ein solches Gewebe herzustellen. Dieses Gewebe zeichnet sich dadurch aus, daß der Abstand der Bindungspunkte zwischen Kett- und Schußfäden von der einen Kante zur anderen Kante der beiden schlauchbildenden Gewebeschichten zunimmt, vorzugsweise linear zunimmt, so daß das Gewebe in Längsrichtung in einer Ebene gekrümmt ist. Ein solches gekrümmtes "Hohl"-Gewebe ist auch als Schlauch mit in Längsrichtung gleichbleibender Breite beziehungsweise gleichbleibendem Durchmesser vorteilhaft, wenn der Schlauch aufgeblasen werden soll. Es kann dadurch die Form durch Weben vorgegeben werden, welche der Schlauch in aufgeblasenem Zustand annehmen soll. Wird die Krümmung nicht durch Weben vorgegeben, wirft der Schlauch im aufgeblasenen Zustand Falten und nimmt eine zufällige Form an.

Es sei erwähnt, daß auch mehr als zwei Schichten übereinander gewebt werden können, z.B. drei. Dabei ergeben sich dann zwei Hohlräume oder Kammern, die in Kettrichtung verlaufen. Die vorgeschlagene Breitenveränderungen führen auch dabei zur Verengung oder Aufweitung der Hohlräume.

Die Erfindung wird nachstehend anhand von Ausführungsbeispielen mit Hilfe von Zeichnungen näher erläutert.

Es zeigen:
- Fig. 1, 1A 1B und 1C: Gewebe mit Hohlraum, dessen Durchmesser sich verändert;
- Fig. 2, 2A und 2B: Konizität durch Herausnahme beziehungsweise Hinzunahme von Kettfäden;
- Fig. 3 und 3A: Erzeugung eines Hohlraumes mit Schützenwebtechnik
- Fig. 4 und 4A: Fächerwebblatt zur Spreizung beziehungsweise Verdichtung von Kettfäden;
- Fig. 5.1 und 5.2: Webmaschinen;
- Fig. 6, 6A und 6B: Gewebebindung;
- Fig. 7.1: Fächerwebblatt zur Spreizung beziehungsweise Verdichtung von Kettfäden;
- Fig. 7.2: Fächerwebblatt mit Zusatz-Rietstäben; FrontAnsicht;
- Fig. 7.3: Seitenansicht des Fächerwebblatts nach Fig. 7.2;
- Fig. 8: Haupt- und Zusatz-Fächerwebblatt;
- Fig. 9.1: Breithalter;
- Fig. 9.2: Breithalter-Steuerung;
- Fig. 9.3, 9.4 und 9.5: Breithalter-Ausführungen;
- Fig. 10.2: drehbare Rietstäbe;
- Fig. 10.3: elliptische Rietstäbe;
- Fig. 11: Greifer-Webmaschine;
- Fig. 12: Webverfahren mit Greifer;
- Fig. 12A: Dreherbindung;
- Fig. 13: Webverfahren mit Schußnadel;
- Fig. 14: gekrümmter Gewebeschlauch;
- Fig. 14A: Brustbaum zur Herstellung eines gekrümmten Gewebeschlauchs;
- Fig. 15: Breitenänderung benachbarter Teilscharen UND
- Fig. 16: Hohlgewebe mit einer Maschennaht, Hilfsfaden und Dreherbindung der Kettfäden:

In den Zeichnungen bedeuten:
- 1: Kettspulen
- 2: Kettfäden
- 3: Bremsen
- 4: Jacquard-Steuerung
- 5: Kettfaden-Positioniereinrichtung
- 6: Ösen, Endöse
- 7: Webblatt, Riet, Hauptriet
- 7.1: Zusatzriet
- 8: Rietstäbe, Sprossen
- 8.1: Zusatzstäbe
- 9: Schütze, Schiffchen, Greifer, Schußnadel
- 10: Schußspule
- 11: Brustbaum, Warenabzug
- 12: Gewebe, Warenabzug
- 13: Trägerbewegung des Trägers 19
- 14: Brems-Steuerung
- 15: Webblatt-Bewegung
- 15.1: Webblatt-Bewegung, Vorbewegung zum Schußfadenanschlag
- 15.2: Webblatt-Bewegung zur Änderung der Gewebebreite
- 16: Gatter
- 17: Aufwicklung
- 18: Träger
- 19: Zylinder-Breithalter, Walze, Klemmrolle, Breithalter
- 20: Gewebeebene, Gewebeschicht
- 21: Träger
- 22: Träger
- 23: Kettbaum
- 24: Streichbaum
- 25: Schäfte
- 28: Gewebeebene, Gewebeschicht
- 101: Schußfaden
- 102: Dreherfaden
- 103: Positionierung der Drehervorrichtung
- 104: Kantenbereich, Dreherkante
- 105: Hilfsfaden
- 106: Zungennadel
- 107: Positionierung der Zungennadel
- 108: Arbeitsbewegung der Zungennadel zur Maschenbildung
- 109: Eintragsbewegung der Schußeintragsnadel

### Herstellung eines nahtlosen schlauchförmigen Gewebes

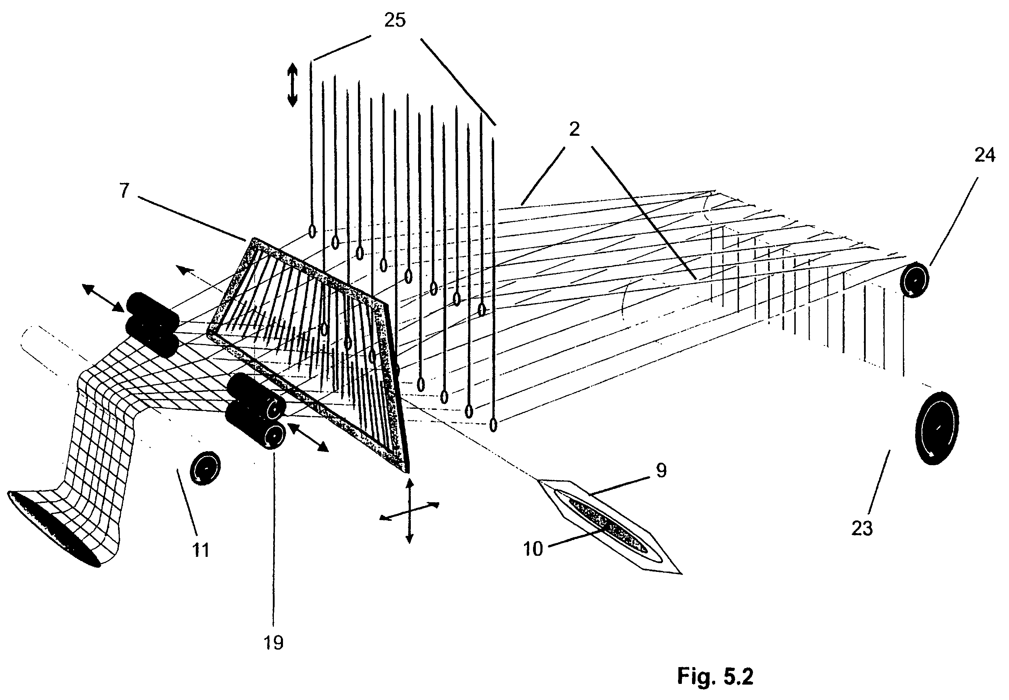

In Fig. 5.1 und 5.2 sind Webmaschinen mit ihren Elementen dargestellt, die zur Ausführung dieser Erfindung bei Herstellung eines nahtlosen Schlauch-Gewebes erforderlich sind. Die folgende Beschreibung gilt für alle dargestellten Webmaschinen, sofern nicht die Unterschiede ausdrücklich hervorgehoben sind.

In Fig. 5.1 werden der Webmaschine einzelne Kettspulen 1 vorgelegt. Die Kettspulen 1 sind auf Gatter 16 aufgesteckt. Die Kettfäden 2 werden von den Spulen abgezogen und sodann individuell durch die einzelnen Elemente der Webmaschine geführt. In dieser Anmeldung wird zuweilen nur von einem Kettfaden gesprochen; es sei jedoch bemerkt, daß damit auch eine Gruppe von zwei, drei oder mehr Kettfäden gemeint sein kann. Statt einzelner Kettspulen wird der Webmaschine nach Fig. 5.2 ein Kettbaum 23 mit einer Vielzahl von Kettfäden vorgelegt, die sodann über den Streichbaum 24 geführt werden. Bei Herstellung eines schlauchförmigen Gewebes können auch zwei oder mehr Kettbäume vorgelegt werden.

Zunächst wird in Fig. 5.1 jeder Kettfaden durch eine der Bremsen 3 geführt. Jede Bremse kann individuell eingestellt werden. Dies kann von Hand geschehen.

Jede Bremse 3 besteht aus einem Unterteller und einem Oberteller. Jeder Kettfaden 2 wird zwischen einem solchen Unterteller und Oberteller hindurch gezogen. Die Unterteller sind ortsfest angeordnet; der Oberteller ist an dem Stößel eines Elektromagneten befestigt und kann mit vorgebbarer Kraft gegen den Unterteller gedrückt werden. Die Elektromagneten werden individuell oder kollektiv durch eine Bremseinrichtung nach Bremsprogramm angesteuert. Dadurch kann die Bremskraft und die Fadenspannung in den Kettfäden 2.1 unterschiedlich eingestellt werden. Andererseits ist die eingestellte individuelle Kettfadenspannung auch von dem Warenabzug 11 und seiner Abzugsgeschwindigkeit abhängig, da die Programmschritte der Bremsprogrammeinheit in Abhängigkeit von der Abzugsgeschwindigkeit des Kettfadens abgerufen werden. Es ist dabei selbstverständlich, daß die Bremsen während des Webprozesses auch konstant einstellbar sind.

Zur Auf- und Abbewegung der Kettfäden dient in Fig. 5.1 die Jacquard-Steuerung 4. In dieser Jacquard-Steuerung 4 sind Harnischfäden 18 aufgehängt. An den Harnischfäden 18 hängen Litzen und an diesen Ösen 6. Durch die Harnischfäden und die Jacquard-Steuerung werden die Ösen aufwärts bewegt und in eine obere Position (Oberfach) gebracht. Die Ösen 6 sind nach unten mit Gummifäden (nicht dargestellt) verbunden, durch die die Ösen gegen die Kraft der Jacquard-Steuerung in eine untere Position (Unterfach) gezogen werden.

Vor den Ösen 6 ist die Kettfaden-Positioniereinrichtung 5 angeordnet. Mittels dieser Kettfaden-Positioniereinrichtung werden die Harnischfäden 4 beziehungsweise Litzen beziehungsweise Ösen 6 seitlich so positioniert, daß die Ösen im wesentlichen denselben Abstand haben wie die durch das Webblatt 7 (siehe unten) laufenden Kettfäden.

Jeder Kettfaden wird hinter seiner Bremse durch je eine Öse der Ösen 6 geführt. Durch die Jacquard-Steuerung 4 wird jeder Kettfaden unabhängig von den anderen Kettfäden in- das Oberfach oder das Unterfach nach dem Programm der Jacquard-Programmeinheit 22 bewegt.

Die Bindungsart des Gewebes wie auch die Zahl der eingebundenen Fäden hängt dabei von der Jacquardsteuerung ab, d.h. davon welche der Kettfäden jeweils bei einem Schuß in das Oberfach beziehungsweise Unterfach bewegt werden.

Es sei bemerkt, daß zur Ausführung dieser Erfindung auch eine Schaftmaschine geeignet ist, die in Fig. 5.2 angedeutet ist.

Hinter der Jacquardeinrichtung beziehungsweise hinter den Schäften ist das Webblatt 7 angeordnet.

Das Webblatt 7 ist ein Rahmen von der Form eines Trapezes oder Parallelogramms. Zwischen der Oberkante und der dazu parallelen Unterkante sind die Rietstäbe 8 (Sprossen) derart eingespannt, daß die Rietstäbe von der Oberkante aus fächerförmig auseinander streben. Ein derartiges Webblatt ist z.B. in der DE 39 15 085 A1 dargestellt. Jeder Kettfaden wird durch einen Zwischenraum zwischen den Rietstäben 8 hindurch geführt. Die Vor-Bewegung 15.1 des Webblattes, durch die nach jedem Schuß der letzte Schußfaden an die Gewebekante gedrückt wird, und die Rück-Bewegung des Webblattes 15.1 wird durch die Maschinensteuerung z.B. einen Kurbeltrieb (nicht gezeigt) bewirkt.

Durch die langsame Auf- oder Abbewegung 15.2 des Webblattes wird der seitliche Abstand der Kettfäden im Webblatt und dahinter bestimmt.

Die Positioniereinrichtung 5 führt die Kettfäden bereits mit dem durch das Webblatt vorgegebenen seitlichen Abstand durch die Ösen der Jacquard-Einrichtung.

Die Auf-Bewegung und Ab-Bewegung 15.2 wird durch die Webblattsteuerung nach einem vorgegebenen Programm gesteuert.

In Fig. 5.2 ist außerdem -besser als in Fig. 5.1- zu sehen, daß zwischen den Haupt-Rietstäben in dem Bereich großer Spreizung der Haupt-Rietstäbe noch Zusatz-Rietstäbe angeordnet sind. Diese Zusatz-Rietstäbe dienen der besseren Führung und Verteilung der Kettfäden, wenn sie durch das Riet im Bereich großer Spreizung geführt und angeschlagen werden. Diese Zusatz-Rietstäbe sind vorzugsweise auch bei der Ausführung der Webmaschine nach Fig. 5.1 vorhanden und werden später noch genauer beschrieben.

Zwischen dem Webblatt und dem fertigen Gewebe erfolgt der Schußeintrag des Schußfadens 9. Hierzu dient in Fig. 5.1, 5.2 vorzugsweise ein Schütze 9. Der Schußfaden wird von Schußspule 10 abgezogen und durch das Fach geführt. Andere Schußeintrag-Systeme sind möglich, lassen aber nicht die Herstellung nahtloser Gewebeschläuche zu. Hierrauf wird später eingegangen.

Das entstehende Gewebe 12 kann durch einzelne Greifer abgezogen werden. Hier wird ein Brustbaum 11 verwandt. Evtl. notwendige Klemmwalzen, die das Gewebe auf dem Brustbaum festklemmen sind hier der Übersichtlichkeit wegen nicht gezeigt. Das entstehende Gewebe wird zwischen dem angetriebenen Brustbaum und den frei drehbaren Gegenrollen festgeklemmt.

Der Brustbaum kann -hier nicht dargestellt- in einzelne Segmente, die jeweils einem Kettfaden oder einer Gruppe von Kettfäden zugeordnet sind, in Längsrichtung unterteilt werden, wie dies in der DE 39 15 085 A1 beschrieben und gezeigt ist. Das Gewebe kann anschließend auf dem Warenbaum 17 aufgewickelt werden.

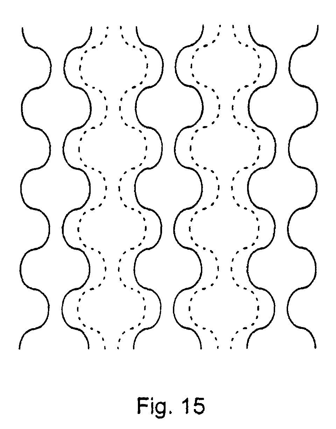

Man kann ein in Längsrichtung gekrümmtes einschichtiges oder schlauchförmiges Gewebe hergestellen, das zudem in Längsrichtung zunehmende oder abnehmende Breite besitzen kann, wie dies in Fig. 14 dargestellt ist. Dazu werden die einzelnen Segmente mit von einem Ende zum anderen Ende des Brustbaums zunehmender Geschwindigkeit angetrieben.

Statt den Brustbaum -wie zuvor beschrieben- in einzelne Segmente aufzuteilen, die jeweils einem Kettfaden oder einer Gruppe von Kettfäden zugeordnet sind und mit von einer Seite zur anderen zunehmenden Geschwindigkeit angetrieben werden, kann zum Abzug eine kegelige Walze oder ein Paar kegeliger Walzen als Brustbaum verwandt werden, die dann allerdings keine Steuerung der Krümmung zulassen. Ein derartiger Brustbaum ist in Fig. 14A dargestellt. Die Vorzüge eines solchen gekrümmten schlauchförmigen Gebildes sind oben beschrieben.

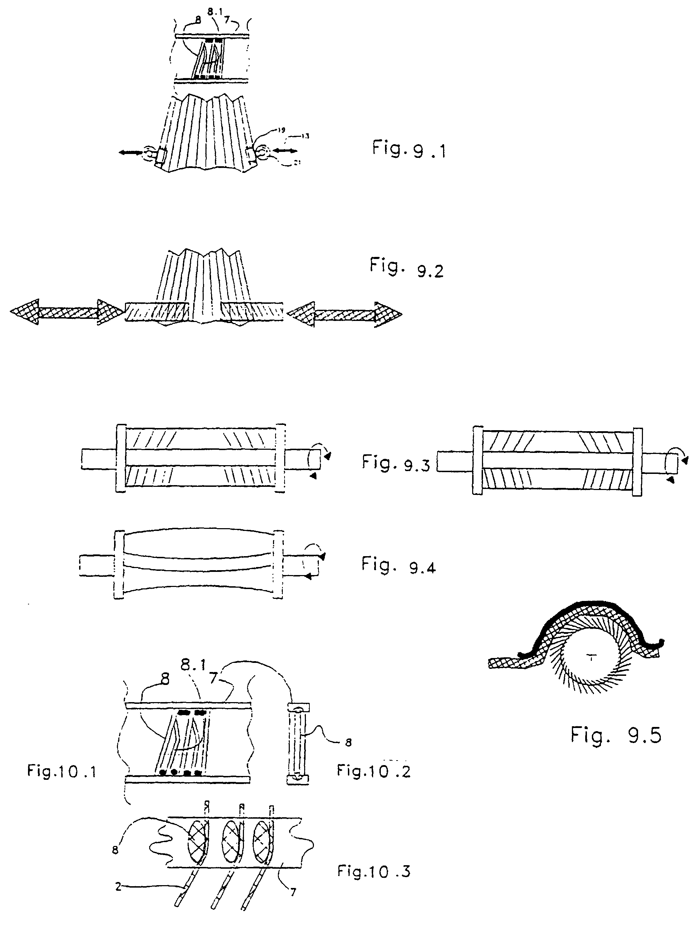

Die Geweberänder werden durch je einen Breithalter geführt. Als Breithalter dienen in Fig. 5.1 und 5.2 Klemmrollen-Paare 19, die dem jeweiligen Geweberand eine nach außen oder nach innen zur Gewebemitte hin gerichtete Bewegungskomponente verleihen. Andere Breithalter, die alternativ einsetzbar sind, werden unten anhand der Figuren 9.1-9.5 beschrieben. Die Breithalter sind möglichst nahe an der Anschlagkante und jedenfalls vor dem Brustbaum 11 angeordnet.

### Zeitweilig wirkende Führung der Kettfäden

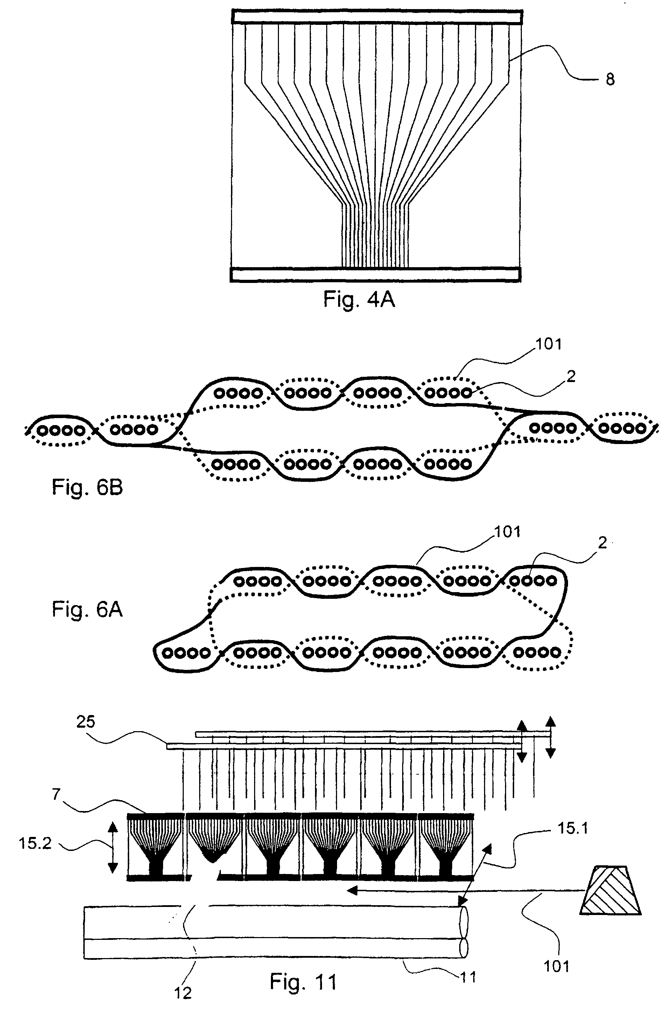

Fig. 4 zeigt schematisch ein Fächerwebblatt zur Spreizung beziehungsweise Verdichtung von Kettfäden, bei dem die Rietstäbe nicht gerade sondern in der Rietebene gebogen sind.

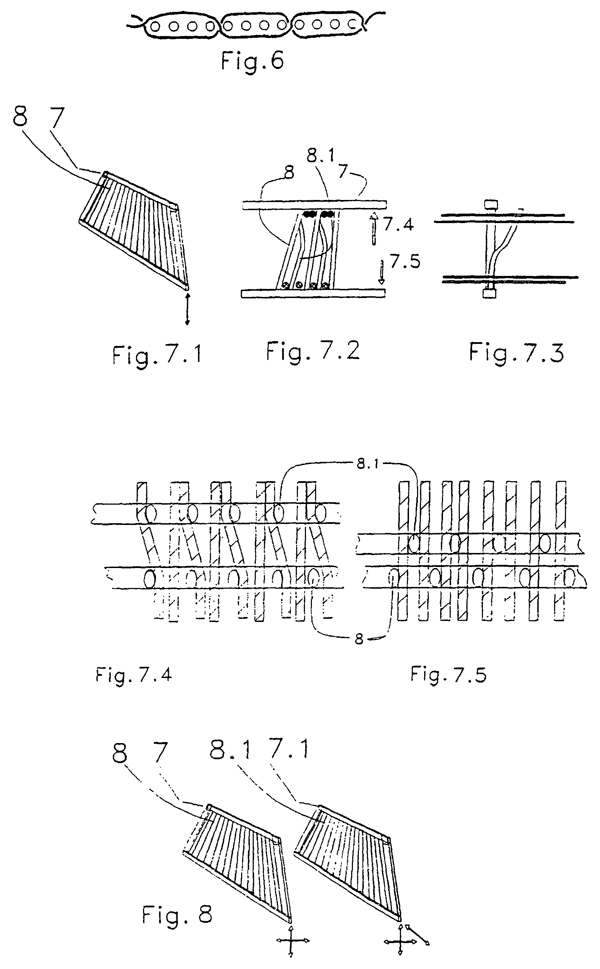

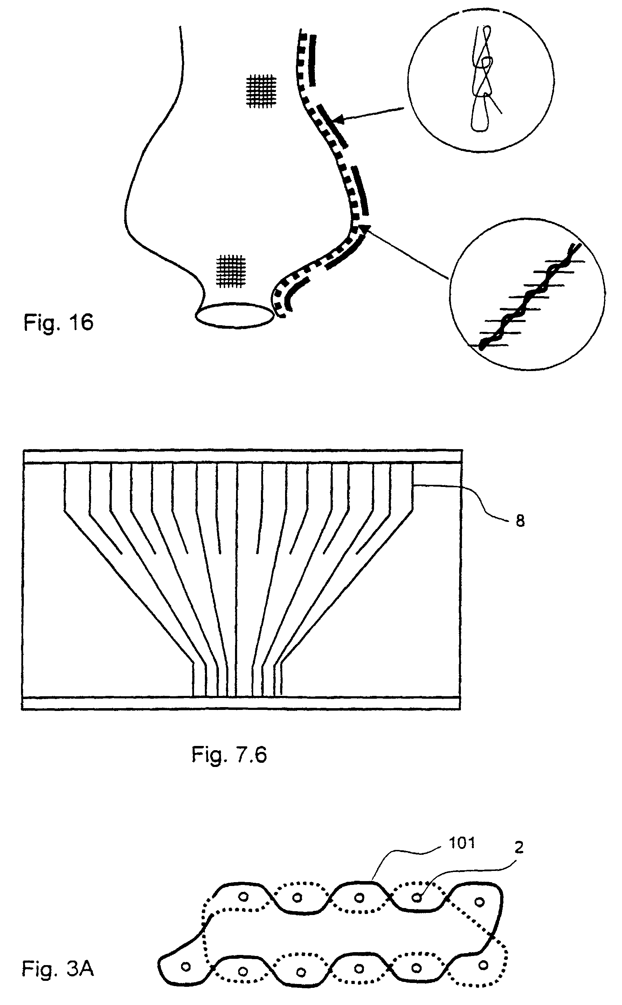

Bei extremen Veränderungen der Kettfadendichte während des Webens richtet sich die Anzahl der Kettfäden, die durch eine Rietlücke geführt werden, nach der kleinsten gewebten Breite beziehungsweise dem kleinsten Durchmesser des Schlauches. Hier müssen z.B. 32 Fäden in einer einzigen Rietlücke platziert werden, da die Breite der Rietstäbe selbst schon zu viel Raum beansprucht und daher nur wenige Rietstäbe gesetzt werden können. Die sehr dicht gepackten Kettfäden können so in den verjüngten Gewebe- beziehungsweise Schlauchzonen gut geführt und beim Anschlag des Schußfadens mit gleichmäßigem Abstand im Gewebe positioniert werden. Während und besonders nach dem Aufspreizen der Kettfäden bilden sich jedoch unerwünschte Gassen zwischen den Kettfäden, da infolge des aufgespreizten Abstandes zwischen den Rietstäben zu wenige Rietstäbe für eine gleichmäßige Kettfadenverteilung über der Gewebebreite vorhanden sind. Um diesen Nachteil zu vermeiden, können folgende Verfahren eingesetzt werden:
a) Bindungen, die relativ wenige Kreuzungsstellen in Schußfadenrichtung aufweisen. Ein Längsrips mit 4 Ketthoch- und 4 Kett-Tiefgängen ist ein Beispiel hierzu. Die Fäden häufen sich hierbei zwar während des Rietanschlages noch immer an den zur Gewebemitte hin liegenden Rietstäben, sie rutschen aber danach wieder in eine relativ gleichmäßige Verteilung aufgrund der im Gewebe vorherrschenden Fadenspannungen. Eine derartige Bindung ist in Fig. 6, 6A und 6B gezeigt. Es sind jeweils 4 gleichbindende Kettfäden vorhanden. Da diese gleichbindenen Kettfäden auch nach dem Anschlag des Schußfadens relativ geringe Reibung gegenüber dem Schußfaden haben, können sie sich auch nach dem Anschlag unter den Gewebespannungen noch gleichmäßig über die Gewebebreite verteilen. Diese Art der Bindung ist auch unabhängig von der Steuerung der Breithaltung von Vorteil, um Gewebe mit starker Schwankung der Breite oder Schläuche mit starken Einschnürungen herzustellen. Je nach dem Ausmaß der Schwankung ist eine derartige Bindung auch unabdingbare Voraussetzung. Fig. 6A zeigt, daß eine derartige Bindung zur Herstellung eines nahtlosen Gewebeschlauchs -vor allem bei über die Schlauchlänge veränderlichem Durchmesser- eingesetzt werden kann. Fig. 6B zeigt, daß eine derartige Bindung zur Herstellung eines Gewebeschlauchs -vor allem bei bei über die Schlauchlänge veränderlichem Durchmesser- eingesetzt werden kann, wobei zwei Schichten von Kettfäden in den Randbereichen des Gewebes gemensam und zwischen den Rändern getrennt abgebunden werden. Hierauf ist in der Beschreibung zu Fig. 11 näher eingegangen.
b) Führung der Kettfäden durch zusätzliche Rietstäbe, die nur in der Stellung des Riets wirksam sind, in der die Rietstab-Abstände groß und die Kettfäden so stark aufgespreizt sind, daß eine Gassenbildung droht. Hierzu können eingesetzt werden:
   - ein spezielles Fächerwebblatt,
   - zwei speziell geformte Rietblätter,
   - zwei identische, jedoch speziell bewegbare Rietblätter,

Spezielle Fächerwebblätter sind in den Fig. 5.2, 7.1 bis 7.5 sowie 7.6 dargestellt.

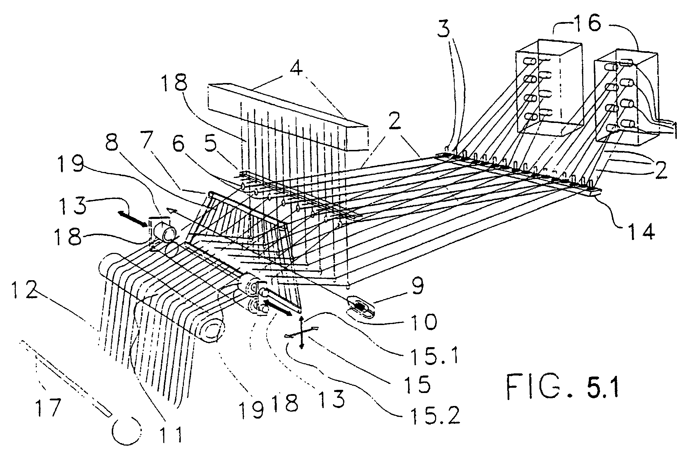

Es handelt sich in diesen Fällen um ein Fächerriet (siehe auch Fig. 5 und 5A) mit Rahmen 7 und Haupt-Rietstäben 8. Die Rietstäbe streben von oben nach unten (oder umgekehrt) fächerförmig auseinander. Daher vergrößern sich die Abstände zwischen den Rietstäben, wenn das Riet in seine Hochstellung bewegt wird und die Kettfäden weit aufgespreizt werden.

Weiterhin besitzen diese Spezialriete zusätzliche Rietstäbe, die im breiten Gewebeteil in den Lücken zwischen den "Haupt-Rietstäben" liegen. Die Zusatz-Rietstäbe sind an der unteren, langen Traverse befestigt und zwar mittig in der Öffnung zwischen zwei benachbarten Haupt-Rietstäben. Sie erstrecken sich von dort zunächst in der Mitte dieser Öffnung in Richtung auf die obere Traverse.

Bei der Ausführung nach Fig. 5.2 sowie 7.6 erstrecken sich diese Zusatz-Rietstäbe nur über einen Teil der Riethöhe. Es kann nicht dargestellt werden, daß an den gegen die obere Traverse weisenden Enden der Zusatz-Rietstäbe jeweils ein Führungsfaden befestigt ist, dessen anderes Ende an der oberen Traverse mittig in der Öffnung zwischen den benachbarten Haupt-Rietstäben geführt und sodann ortsfest befestigt ist. In der Tiefstellung des Riets sind die Fäden nicht gespannt. Die Kettfäden werden in gleichmäßiger Verteilung in die Öffnungen eingezogen, die jeweils zwischen einem Haupt-Rietstab und dem benachbarten Zusatz-Rietstab beziehungsweise dem daran befestigten Faden gebildet werden. Da die Fäden in der Tiefstellung des Riets nicht gespannt sind, können sich die Kettfäden hier ohne Führung durch die Fäden frei in der Öffnung zwischen zwei benachbarten Haupt-Rietstäben verteilen. Wird das Riet in die Hochstellung gefahren, so daß die Kettfäden zu großer Breite aufgespreizt werden, werden die Fäden gespannt und die Kettfäden gleiten an den Fäden ab in die Öffnungen zwischen jeweils einem Haupt- und einem Zusatz-Rietstab. Hierdurch ergibt sich auch bei weiter Aufspreizung der Kettfadenschar eine gute Führung und Verteilung beim Anschlag des Schußfadens an die Gewebekante.

Bei der Ausführung nach Fig. 7.2/7.3 sind die Zusatz-Rietstäbe 8.1 ebenfalls an nur der langen -hier der unteren- Traverse des Rahmens 7 befestigt. Diese Zusatz-Rietstäbe sind so geformt, daß sie -wie die Frontansicht des Riets nach Fig. 7.2 zeigt- in dem Bereich mit großem Abstand zwischen den Rietstäben 8 den Abstand zwischen den Haupt-Rietstäben 8 noch einmal teilen und dabei - wie in Fig. 7.3 zu sehen- in derselben Ebene oder nahe an der Ebene der Haupt-Rietstäbe liegen. Im schmalen Gewebeteil verlaufen diese Zusatz-Rietstäbe hinter den Haupt-Rietstäben, so daß sie -wie die Frontansicht des Riets nach Fig. 7.2 zeigt- in dem Bereich mit kleinem Abstand zwischen den Rietstäben 8 hinter den Haupt-Rietstäben 8 verschwinden, d.h. sie liegen im wesentlichen auf derselben Senkrechten oder senkrechten Ebene zu Riet wie die Haupt-Rietstäbe 8. Ferner sind die Zusatz-Rietstäbe in diesem Bereich -wie die Seitenansicht des Riets nach Fig. 7.3 zeigt- aus der Ebene der Haupt-Rietstäbe 8 gegen die Kettfadenrichtung gebogen und schräg zu dieser Ebene geneigt. Die Kettfäden werden daher beim Anschlag des Schußfadens nur zwischen den Haupt-Rietstäben geführt, wenn eine geringe Gewebebreite hergestellt wird. Bewegt sich das Riet in die gegensätzliche Position zur Herstellung der großen Gewebebreite, so treten die Zusatz-Rietstäbe in Funktion und die Kettfäden werden beim Anschlag des Schußfadens in den Öffnungen zwischen den Haupt-Rietstäben und den Zusatz-Rietstäben geführt.

Eine Ausführung mit zwei Rietblätter ist in Fig. 8 dargestellt.

Diese Rietblätter liegen in parallelen Ebenen hintereinander. Sie werden hinsichtlich ihrer Hoch/Tiefstellung und -vorzugsweise auch- hinsichtlich des Schußfadenanschlags synchron gesteuert. Zusätzlich kann der Abstand des hinteren Zusatz-Riets zu dem vorderen Haupt-Riet gesteuert werden.

In dem Ausführungsbeispiel sind Haupt-Riet und Zusatz-Riet hinsichtlich der Anordnung der Rietstäbe identisch. Jedoch kann das Zusatz-Riet außerdem eine seitliche Bewegung machen, die bis zur Hälfte der größten Teilung der Haupt-Rietstäbe beträgt. Diese Bewegung erfolgt synchron und im wesentlichen proportional zu der Hoch/Tief-Stellung der Riete.

Bei einem doppelten Riet mit speziell geformten Rietblättern (nicht darstellbar) hat das erste, zur Anschlagkante des Gewebes gewandte Riet (Haupt-Riet) große Rietlücken, d.h. wenige Rietstäbe, um für die kleine Gewebebreite Platz zu schaffen. Das zweite Riet (Zusatz-Riet) befindet sich zwischen dem ersten und den Schäften beziehungsweise den Harnischlitzen. Dieses Riet hat kleinere Rietlücken und führt die Fäden im gespreizten Zustand. Nur in diesem gespreizten Zustand wird das zweite Riet mit dem ersten gemeinsam angeschlagen. Beim Weben geringer Gewebebreite verbleibt das zweite Riet an der hintersten Position direkt vor den ersten Litzen.

Dabei sind die Rietstäbe des Zusatz-Riets so geformt, wie es zuvor für die Zusatz-Rietstäbe nach Fig. 7.2 und 7.3 beschrieben wurde, mit dem einzigen Unterschied, daß die Zusatz-Rietstäbe an beiden Traversen des Zusatz-Rietblattes befestigt sind. Möglich ist aber auch, daß die Zusatz-Rietstäbe zwar die Form und Anordnung haben, die anhand von Fig. 7.2 beschrieben wurde, d.h. Die Zusatz-Rietstäbe sind so geformt, daß sie in dem Bereich mit kleinem Abstand zwischen den Rietstäben 8 hinter den Haupt-Rietstäben 8 verschwinden, daß sie jedoch in dem Bereich mit großem Abstand zwischen den Rietstäben 8 den Abstand zwischen den Haupt-Rietstäben 8 noch einmal teilen. Außerdem können die Zusatz-Rietstäbe so geformt sein, wie anhand von Fig. 7.3 beschrieben, d.h. daß sie in dem Bereich mit kleinem Abstand nahe an der Ebene der Haupt-Rietstäbe liegen, und daß sie in dem Bereich mit großem Abstand zwischen den Rietstäben 8 von der Ebene der Haupt-Rietstäbe 8 gegen die Kettfadenrichtung wegstreben und schräg zu dieser Ebene geneigt sind.

Wird diese soeben anhand von Fig. 7.3 beschriebene Form nicht angewandt, d.h. wenn die Zusatz-Rietstäbe in einer gemeinsamen Zusatz-Rietebene liegen, kann das Zusatz-Riet synchron zu der Hoch/Tiefbewegung den Abstand zum Haupt-Riet vergrößern oder verringern.

Bei all diesen Ausführungen wird eine Fadenführung erreicht, die nachfolgend anhand der Figuren 7.4 und 7.5 beschrieben wird.

Fig. 7.4 und 7.5 stellen einen senkrechten Schnitt durch die Rietstäbe 8 und Zusatz-Rietstäbe 8.1 dar und zwar:
- Fig. 7.4: bei Einschnürung der Kettfäden und Blick in Richtung des Pfeils 7.4 (Fig. 7.2) und
- Fig. 7.5: bei Spreizung der Kettfäden und Blick in Richtung des Pfeils 7.5 (Fig. 7.2)

In der Tiefstellung des Riets nach Fig. 7.1 beziehungsweise der Riete nach Fig. 8, d.h. bei Einschnürung des Kettfadenabstandes verschwinden die Zusatz-Rietstäbe 8.1 hinter den Haupt-Rietstäben 8, so daß die Zusatz-Rietstäbe keine Führungsfunktion haben. Die Zusatz-Rietstäbe liegen auf derselben in Kettfadenrichtung weisenden, zur Rietebene senkrechten Linie (Kett-Linie) wie die Haupt-Rietstäbe. Wenn in einen Zwischenraum (Öffnung) zwischen zwei Haupt-Rietstäben zwei Kettfäden eingezogen werden, so wird von diesen jeweils einer durch die entsprechende, auf derselben Kett-Linie liegende Öffnung des Zusatz-Riets gezogen, der andere jedoch durch die daneben liegende Öffnung. Dabei haben die Hauptriet-Ebene und die Zusatz-Rietebene einen großen Abstand, so daß- die umgelenkten Kettfäden nur einen geringen Umschlingungswinkel an den Haupt- beziehungsweise Zusatz-Rietstäben haben.

In der Hochstellung des Riets (Fig. 7.1) beziehungsweise der Riete (Fig. 8), d.h. bei Spreizung des Kettfadenabstandes befinden sich die Zusatz-Rietstäbe 8.1 - wie Fig. 7.5 zeigt- in den Zwischenräumen der Haupt-Rietstäbe 8, so daß die Zusatz-Rietstäbe mit den Haupt-Rietstäben Öffnungen bilden, in die die Kettfäden -regelmäßig eine Gruppe von Kettfäden- in gleichmäßiger Verteilung eingezogen sind. Bei Verwendung identischer Riete wird dies durch die beschriebene seitliche Bewegung des Zusatz-Riets bewirkt.

Gleichzeitig mit der Tiefstellung wird die Zusatz-Rietebene möglichst nahe an die Haupt-Rietebene gelegt, um beim Anschlag des Schußfadens und der dadurch bewirkten Einbindung der Kettfäden eine gute Verteilung und Führung der Kettfäden zu erreichen. Dies geschieht entweder durch die besondere Form der Zusatz-Rietstäbe oder -bei Verwendung identischer Riete- durch die beschriebene Bewegung des Zusatz-Riets in Kett-Richtung.

Diese Funktionen kann man auch durch ein Fächerwebblatt erreichen, das steuerbare Zusatz-Rietstäbe besitzt, wie dies in der 39 15 085 A1 beschrieben und gezeigt ist.

Diese Rietstäbe nehmen im breiten Gewebeteil eine Position zwischen den Hauptstäben ein und werden im schmalen Gewebeteil hinter die Hauptstäbe gesteuert. Dies kann z.B. mit einem Exzenter geschehen. Oder die Zusatz-Rietstäbe werden zeitweilig zwischen die schon vorhandenen Rietstäbe geschoben.

### Fadenschonende Rietausführung

Vorteilhaft ist weiterhin eine fadenschonende Rietausführung. Die Kettfäden werden durch die extreme Spreizung/Verdichtung an den Rietstäben sehr stark umgelenkt und damit auf Reibung beansprucht. Besonders die außen liegenden Fäden werden dadurch geschädigt. Faserschonende Elemente können sein:
- elliptisch geformte Rietstäbe: Hierzu wird auf Fig. 10.3 verwiesen. Die Längsachsen der Elipsen liegen in Kett-Richtung. Der Vorteil dieser Querschnittsform der Rietstäbe besteht in der Vermeidung einer scharfen Umlenkstelle, hier einer Kante, um welche die Kettfäden unvermeidlich mit einem Winkel und unter Spannung geführt werden. Durch elliptische Ausführung der Rietstäbe wird die scharfkantige Umlenkung vermieden und ein wesentlich vergrößerter Umlenkradius erreicht.
- drehbar gelagerte Rietstäbe: Hierzu wird auf Fig. 10.2 verwiesen. Die geraden Rietstäbe und Zusatz-Rietstäbe sind um ihre Längsachse drehbar gelagert, so daß jede Reibung und jeder Fadenspannungsabbau durch Umlenkung vermieden wird.
- beschichtete Rietstäbe, so daß der Reibungskoeffizient verringert wird.

### Führung des Geweberandes

Die Erfindung ermöglicht starke Breitenänderungen während des Webens, indem die Führung des Gewebes beziehungsweise der beiden Gewebekanten die Breitenänderung unterstützt. Andernfalls ist mit einer Schädigung der Fäden zu rechnen, die der Anwendung eines Webverfahrens mit sich ändernder Gewebebreite entgegensteht. Um eine Schädigung der Fäden zu vermeiden und um möglichst rasch Breitensprünge realisieren zu können, soll das Gewebe bei der Entstehung an beiden Außenkanten oder über der gesamten Gewebebreite das Gewebe entsprechend der aktuell gewebten Breite geführt werden. Diese Gewebeführung liegt zwischen dem zuletzt eingetragenen Schußfaden und dem Warenabzug. Vorteilhaft ist eine besonders dichte Position an dem zuletzt eingetragenen Schußfaden.

Grundsätzlich ist zu unterscheiden zwischen Breithaltern, die nur an den beiden Geweberändern angreifen (Breithalter der ersten Art) und Breithaltern, die sich über die gesamte Gewebebreite erstrecken (Breithalter der zweiten Art).

Erfindungsgemäß ist die erste Art der Breithalter 19 auf einem Träger 18 angebracht, der in Richtung der Gewebebreite fahrbar und positionierbar ist. Dadurch kann der Abstand der Breithalter 19 dem augenblicklichen Webprogramm hinsichtlich der Gewebebreite angepaßt und synchron mit dem Kettfadenabstand und der dadurch bewirkten Gewebebreite verändert werden.

Diese Steuerung der Breithalter ist in Fig. 5.1, 5.2, 9.1 gezeigt.

Als Träger kommt z.B. eine Gewindebuchse in Betracht, wobei die Gewindespindel sich über die Breite des Gewebes erstreckt und an ihren Enden Gewinde mit gegensätzlicher Steigung aufweist. Durch Drehantrieb der Gewindespindel kann der Abstand der beiden Träger der jeweils aktuellen Webbreite angepaßt werden.

Möglich ist auch eine Ausrichtung des Trägers und des Breithalters auf die Neigung des Geweberandes relativ zur Abzugsrichtung des Gewebes, wie in Fig. 9.1 angedeutet. Dadurch kann die Ausrichtung und Wirkung des Breithalters noch stärker auf die jeweils zu webende Gewebebreite und Änderung der Gewebebreite eingestellt werden.

Erfindungsgemäß ist für die zweite Art der Breithalter vorgesehen, daß mindestens zwei Breithalter mit unterschiedlicher -insbesondere gegensätzlicher-Breithalte-Wirkung vorgesehen sind und in Abhängigkeit von dem augenblicklichen Webprogramm und angepaßt an den Kettfadenabstand und die dadurch bewirkte Gewebebreite abwechselnd in Eingriff mit dem Gewebe gebracht werden.

Als Elemente der ersten Art können Verwendung finden:
- seitlich verstellbare Zylinderbreithalter. Diese können z.B. auf einer Gewindestange durch Drehung derselben positioniert werden. Fig. 9.5 zeigt ein Element eines Zylinderbreithalters. Es ist eine frei drehbare Walze, die auf ihrem Umfang mit Nadeln besetzt ist. Die Nadeln werden im Führungsbereich des Gewebes von einem Niederhalter umgeben, der das Gewebe auf die Nadelspitzen drückt.
- seitlich verstellbare Rillenstäbe. Diese Stäbe stehen still und werden von den Geweberändern teilweise umschlungen. Sie weisen nach außen oder nach innen gerichtete Rillen auf, die das Gewebe in Breitenrichtung spannen.
   Als Elemente der zweiten Art können Verwendung finden:

- feststehende Walze mit Führungsrillen die sich über die Gewebebreite erstreckt. Die Führungsrillen weisen in Erzeugungsrichtung des Gewebes mit einer Komponente in Richtung der Breite. Diese Komponente kann unterschiedlich groß und zur Vergrößerung der Breite nach außen und zur Verringerung der Breite nach innen gerichtet sein, so daß durch Einsatz verschiedener Walzen auch gegensätzliche Breithaltungswirkungen erzielbar sind (Fig. 9.3).
- feststehende Walzen mit unterschiedlich konvexen und/oder konkaven Mänteln (Fig. 9.4).

Träger mit zwei derartigen Walzen sind in Fig. 9.3 und 9.4 dargestellt. In Fig. 9.3 -linke Alternative)- weisen die beiden Walzen Rillen auf, die relativ zur Abzugsrichtung nach außen weisen. Diese Neigung ist bei beiden Walzen unterschiedlich. In Fig. 9.3. rechte Alternative sind die Neigungen beider Walzen gegensätzlich.

In Fig. 9.3 sind auf dem Träger eine konkave und eine konvexe Walzen befestigt. Durch diese Form haben die Walzen unterschiedliche und gegensätzliche Breithaltewirkung, wenn sie mit dem Gewebe in Kontakt gehalten werden.

Durch Drehen der Träger können die Walzen (Fig. 9.2; 9.3) abwechselnd in Berührung mit dem Gewebe gebracht werden. Dadurch erfolgt eine Anpassung der Breithalt-Wirkung an die jeweilige Breite und die augenblickliche Breitenänderung.

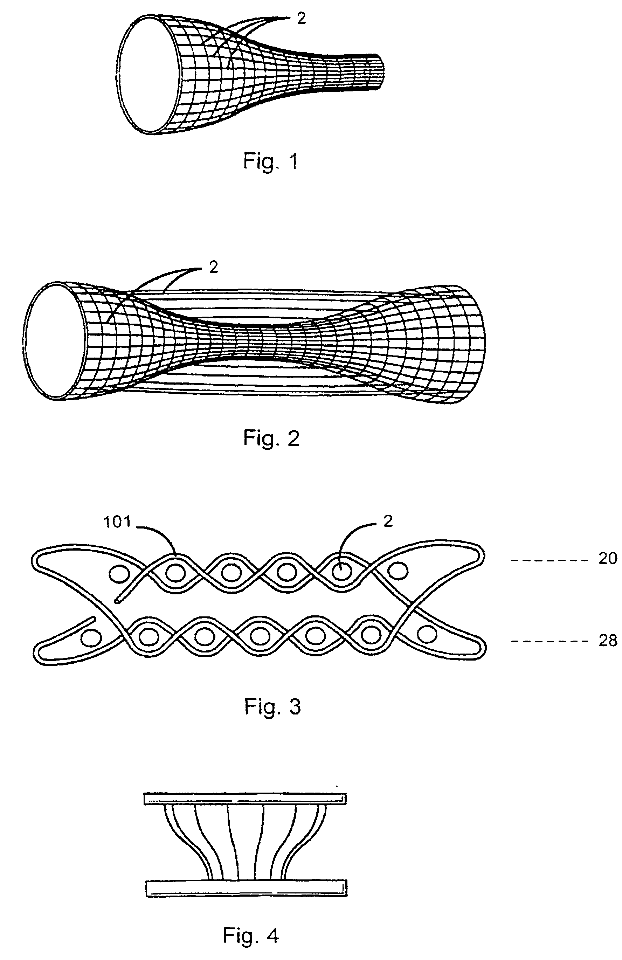

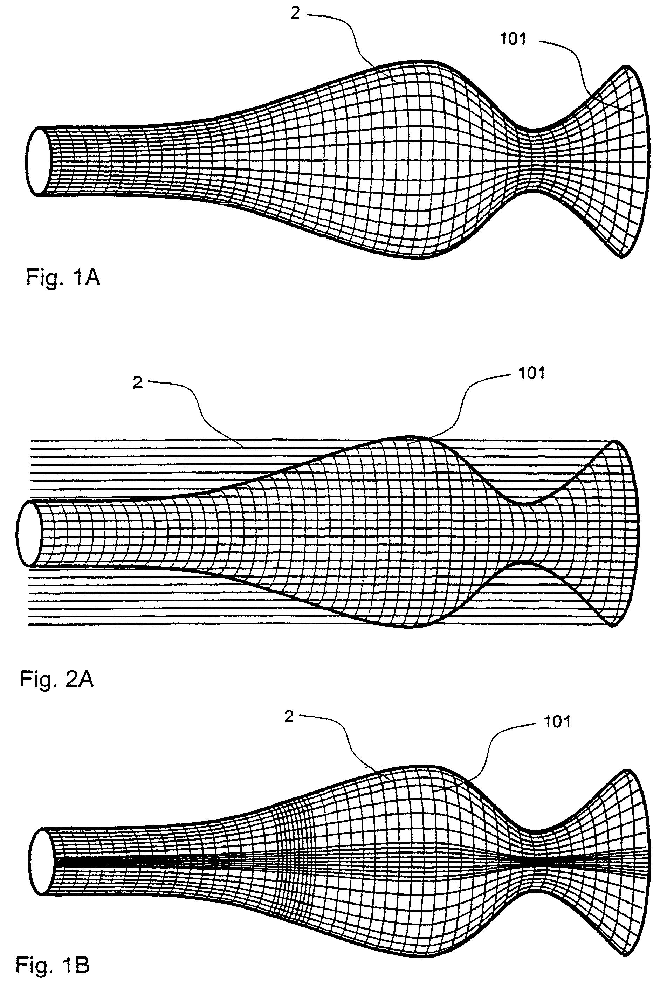

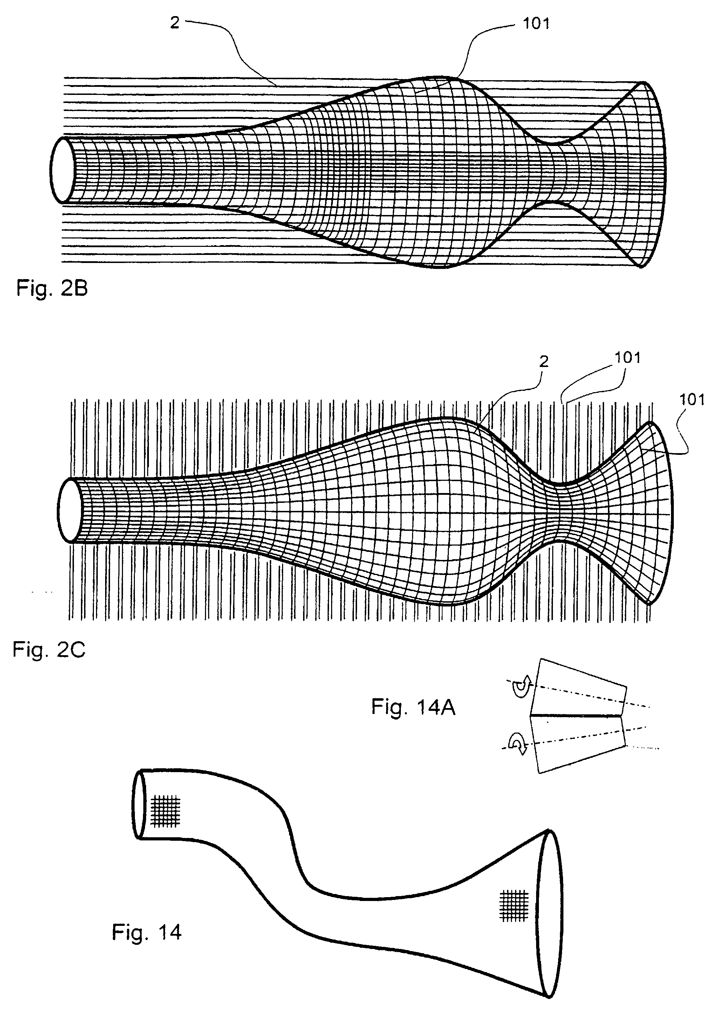

Nach der Erfindung lassen sich Gewebe herstellen, deren Breite sich über die Länge stark ändert. Dabei kann es sich um Bänder handeln. Vor allem sind schlauchförmige Gewebe herstellbar, wie sie als Beispiel in Fig. 1,1A, 1B und 1C sowie 2,2A und 2B dargestellt sind. Es kann sich um konische oder doppelkonische Schläuche handeln, die mit Kette in Längsrichtung und Schuß in Querrichtung hergestellt sind. Bei einem derartigen Gewebe mit Hohlraum verändert sich der Durchmesser über die Länge. Bei dem Gewebe nach Fig. 2,2A,2B wird die Konizität durch Herausnahme beziehungsweise Hinzunahme von Kettfäden 2 in die Bindung unterstützt, so daß die Kettfäden im Bereich geringeren Durchmessers nicht eingebunden sind, d.h. flottieren. Dadurch kann die Zahl der eingebundenen Kettfäden der jeweiligen Gewebebreite angepaßt und die Kettfadendichte der eingebundenen Kettfäden im wesentlichen konstant gehalten oder unabhängig von der Gewebebreite gesteuert werden. Die Fig. 1B und 2B zeigen darüber hinaus, daß die Dichte der Kettfäden über die Gewebebreite variieren kann. Zusätzlich kann auch die Dichte der Schußfadenkreuzungen über die Gewebelänge unterschiedlich gesteuert und den Bedürfnissen angepaßt werden.

Fig. 3 und Fig. 6A zeigen die Erzeugung eines Hohlraumes mit Schützenwebtechnik. Die Kettfäden werden abwechselnd der oberen und der unteren Gewebeschicht 20 beziehungsweise 28 zugeordnet. Sodann bilden die Kettfäden der beiden Gewebeschichten abwechselnd das Fach für den Schußfadeneintrag durch Schütz (Webschiffchen), so daß der Schußfaden auf dem Hinweg die Kettfäden der einen Gewebeschicht 20 abbindet und auf dem Rückweg die Kettfäden der anderen Gewebeschicht 28 abbindet usw. Dabei wird der Schußfaden an den Gewebekanten nicht geschnitten. Daher gehen die Gewebeschichten 20,28 an den Längskanten endlos in einander über.

Dieses Verfahren kann auf den Webstühlen nach Fig. 5.1 und 5.2 und mit beschriebenen Rieten ausgeführt werden, indem die Kettfäden entsprechend auf die beiden Gewebeschichten aufgeteilt und die Jacquardmaschine beziehungsweise die Schäfte so gesteuert werden, daß das Fach für den Schußfaden abwechselnd von den Fäden der einen und der anderen Gewebeschicht gebildet wird.

### Herstellung eines schlauchförmigen Gewebes mit Naht

Nach dieser Erfindung lassen sich auch schlauchförmige Gewebe mit variabler Breite/ variablem Durchmesser herstellen, welche eine oder zwei Längsnähte besitzen.

Bezüglich der Herstellung eines schlauchförmigen Gewebes, welches zwei Längsnähte besitzt, wird auf die Figuren 11, 6B und 12, 12A verwiesen.

Fig. 11 zeigt schematisch Teile eines Greifer-Bandwebstuhls mit zwei Schäften 25 zur Fachbildung von zwei Gewebeschichten. Die Schar der Kettfäden 2 ist in sechs Teilscharen aufgeteilt. Jede Teilschar kann durch jeweils ein Riet, ausgebildet wie z.B. in Fig. 7.6 gezeigt, hinsichtlich des Kettfadenabstandes durch Hoch- oder Tiefstellung des jeweiligen Riets separat eingestellt werden. Der Schußfadenanschlag der Riete an die Gewebekante erfolgt synchron nach dem Eintrag des Schußfadens in das synchron für alle Teilscharen gebildete Fach. Dazu wird der Schußfaden 9 mittels Greifer (nicht dargestellt) über die gesamte Breite der Kettfadenschar eingetragen. Die Kettfäden sind zwei Gewebeschichten zugeordnet, die im mittleren Bereich jeder Teilschar von einem Schußeintrag zum anderen abwechselnd zum Fach geöffnet werden. Daher werden die den beiden Gewebeschichten in diesem Bereich zugeordneten Kettfäden nur in einer Gewebeschicht abgebunden. In den Randbereichen der äußeren Teilscharen und in den Zwischenbereichen zwischen den benachbarten Teilscharen werden die Kettfäden jedoch gemeinsam an der Fachbildung beteiligt. Daher werden die Kettfäden hier zu einer einzigen Gewebeschicht abgebunden -vgl. insbesondere Fig. 6B.

Durch Hoch- oder Tiefstellung kann -wie gesagt- der Kettfadenabstand jeder Teilschar gesteuert werden. Diese Steuerung erfolgt vorzugsweise so, wie es aus Fig. 15 zu ersehen ist: Die Breitenänderung benachbarter Teilscharen erfolgt derart phasenversetzt, daß bei zunehmender Breite einer Teilschar die Breite der benachbarten Teilschar vermindert wird. Im Idealfalle läßt sich erreichen, daß die Gesamtbreite der Kettfadenschar im wesentlichen konstant bleibt. Dieses Verfahren erspart Material und Verschnitt. Die Zwischenbereiche werden nach dem Weben in Längsrichtung durchschnitten, so daß schlauchförmige Bänder unterschiedlicher Breite entstehen.

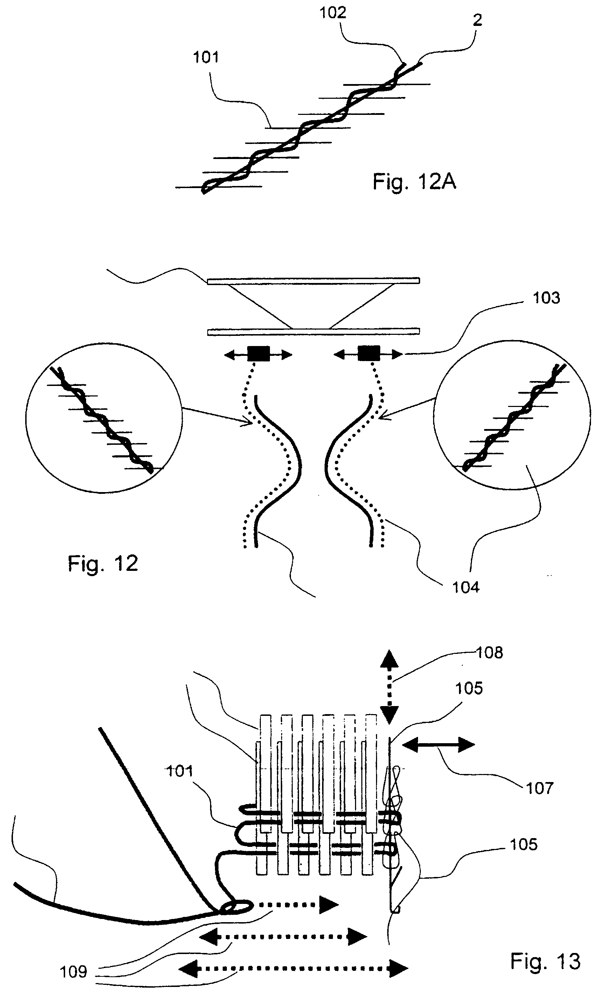

In Fig. 12A ist angedeutet, daß die Kettfäden der beiden Gewebeschichten in den Rand- und oder Zwischenbereichen der in Form einer Dreherbindung mit einander verbunden sein können. Zu den Dreherbindungen und der Herstellung von Dreherkanten wird auf das Buch "Martin Kienbaum, Binungstechnik der Gewebe, Band 3:Dreher-, Falten-, Flor- und Jacquardgewebe, Verlag Schiele&Schön, Berlin, 1996" verwiesen. Durch die Dreherbindung wird die Stabilität dieser Rand- beziehungsweise Zwischenbereiche 104, die die beidseits des jeweiligen Schlauchs eine Naht bilden, erhöht und es ist möglich, den gewebten Schlauch mit einem Innendruck zu beaufschlagen, ohne daß der Schlauch durch Auflösung des Randbereichs platzt. Das noch unzerschnittene Gewebe wird sodann durch einen gemeinsamen Brustbaum 11 abgezogen.

In den Rand- beziehungsweise Zwischenbereichen der Teilscharen sind -wie in Fig. 12 angedeutet- Breithalter 19 angeordnet, die der durch die Riete vorgegebenen Breiteneinstellung der Kettfadenschar beziehungsweise Teilschar folgen, wie zuvor beschrieben.

Bezüglich der Herstellung eines schlauchförmigen Gewebes, welches eine Längsnaht besitzt, wird auf Fig. 13 und 16 verwiesen.

In Fig. 13 ist angedeutet, daß die Kettfäden 2 zwei Gewebeschichten zugeordnet sind, die abwechselnd das Fach für den Schußfadeneintrag bilden. Der Schußfaden wird durch eine Schußnadel 9 eingetragen und ist am vorderen Ende in einer Öse geführt. Dadurch bildet der endlose ungeschnittene Schußfaden 101 an der der Eintragseite abgewandten Seite der Kettfadenschar Schlaufen. Diese Schlaufen werden durch ein Häkelverfahren in bekannter Weise verhäkelt oder auf sonstige Weise vermascht und dadurch die beiden Gewebeschichten durch diese Maschennaht verbunden. Wie dargestellt wird dazu eine maschinell geführte Nadel verwandt; die Nadel führt entsprechend der Breitenänderung des Gewebes auch eine seitliche Positionierungsbewegung 107 aus. Zusätzlich kann zur Vermaschung ein zusätzlicher Hilfsfaden 105 verwandt werden. Bei dieser Bildung der Maschennaht kann es sich um ein Häkelverfahren handeln. Hierzu wird verwiesen auf: "Hans Walter Kipp, Bandwebtechnik, Hrsg.: JTM-Stiftung, Frick/Schweiz, Verlag Sauerländer, Frankfurt a.M. 1988". Dadurch wird eine größere Festigkeit der entstehenden Häkel/Maschenkante gegen Aufplatzen erzielt. Auf der Eintragseite läuft der Schußfaden endlos von einer Gewebeschicht zur anderen und verbindet dadurch die Gewebeschichten. Im Gegensatz zu dem Webstuhl mit Schützeneintrag des Schußfadens ist hier die Anpassung des Wegs 109 der Schußnadel an die durch die Rietstellung vorgegebene Gewebebreite erforderlich. Es wird ein Riet -wie zuvor beschrieben- verwandt. Fig. 6B sowie 16 zeigen ein Hohlgewebe, das auf diese Weise hergestellt worden ist. Fig. 16 deutet die Häkelkante mittels Hilfsfaden an, wobei die Gewebeschichten in diesem Bereich zusätzlich durch eine Dreherbindung der Kettfäden mit einander verbunden sein können. Der Schlauch nach Fig. 1C ist mittels Projektil- oder Greiferverfahren nach Fig. 6B, Fig. 11 hergestellt durch seitliche Kettfaden-Spreizung und -Verdichtung.

## Patentansprüche

1. Webverfahren, bei dem zur Herstellung eines Gewebes (12), das über seine Länge eine unterschiedliche Breite aufweist, die Kettfadenschar im Bereich des Webfachs mit einem der gewünschten Gewebebreite entsprechenden vergrößerten oder verkleinerten Kettfadenabstand geführt wird,
**dadurch gekennzeichnet, daß**
das Gewebe zumindest an seinen beiden Gewebelängsrändern und vorzugsweise unmittelbar nach dem Anschlag des Schußfadens (9, 10) durch Breithalter (19) geführt wird, deren Breitführungswirkung synchron mit und im wesentlichen proportional zu der Vergrößerung und Spreizung sowie Verkleinerung und Einschnürung des Kettfadenabstandes steuerbar ist.

2. Webverfahren nach Anspruch 1
**dadurch gekennzeichnet, daß**
die Breithalter (19) nur am Geweberand angreifen und daß der Breithalter-Abstand synchron mit und proportional zu der Vergrößerung und Verkleinerung des Kettfadenabstandes gesteuert its, wobei als Breithalter (19) insbesondere nadelbesetzte Zylinder-Breithalter, Klemmrollenpaare oder nicht drehende stillstehende Stäbe verwendet werden, über die das Gewebe (12) mit seinen Randbereichen unmittelbar nach dem Schußfadenanschlag berührend geführt wird und die im Berührungsbereich des Gewebes Führungsrillen aufweisen, die relativ zur Abzugsrichtung schräg nach außen verlaufen.

3. Webverfahren nach Anspruch 1
**dadurch gekennzeichnet, daß**
die Breithalter (19) Stäbe sind, die sich über die gesamte Gewebebreite erstrecken, daß mehrere Stäbe mit von Stab zu Stab unterschiedlicher, insbesondere gegensätzlicher Breitführungswirkung bereitgehalten werden und
daß die Stäbe synchron und entsprechend der Spreizung oder Einschnürung des Kettfadenabstandes wechselweise in Betriebsposition fahrbar sind, so daß die Breitführungswirkung im Berührungsbereich des Gewebes der Spreizung oder Einschnürung entspricht, insbesondere Stäbe mit Führungsrillen, die in Entstehungsrichtung mit von Stab zu Stab unterschiedlicher Neigung nach außen weisen, nicht drehende oder drehbare Walzen, die von Walze zu Walze unterschiedlich konkave und/oder konvexe Mantelflächen besitzen.

4. Webverfahren nach einem der Ansprüche 1 bis 3
**dadurch gekennzeichnet, daß**
das Gewebe (12) in einer Bindung hergestellt wird, bei welcher mehrere, vorzugsweise mehr als zwei unmittelbar benachbarte Kettfäden (2) gleich binden, z.B.: in Längsripsbindung mit 4 Ketthochgängen und 4 Kett-Tiefgängen.

5. Webverfahren nach einem der Ansprüche 1 bis 4
**dadurch gekennzeichnet, daß**
zwei Kettfaden-Schichten übereinanderliegend geführt und abwechselnd zu einem Fach geöffnet werden,
daß der Schußfaden (101) dabei ungeschnitten durch Schütze geführt wird und abwechselnd die obere und die untere Kettfaden-Schicht zu einer Gewebelage (20,28) abbindet und die Gewebelagen in ihren Randbereichen ohne Naht zu einem gewebten Schlauch verbindet.

6. Webverfahren nach einem der Ansprüche 1 bis 4
**dadurch gekennzeichnet, daß**
zwei Kettfaden-Schichten übereinanderliegend geführt werden, welche in den Randbereichen der Gewebebreite durch den Schußfaden (101) gemeinsam abgebunden werden, in dem mittleren Bereich der Gewebebreite jedoch abwechselnd zu einem Fach geöffnet werden, wobei der Schußfaden (101) durch Greifer eingetragen wird und abwechselnd die obere und die untere Kettfaden-Schicht zu einer Gewebelage abbindet.

7. Webverfahren nach Anspruch 6
**dadurch gekennzeichnet, daß**
die Kettfaden-Schar in mehrere Teilscharen aufgeteilt wird, daß jede Kettfaden-Teilschar im Bereich der Webfachs mit einem der gewünschten Gewebebreite entsprechenden vergrößerten oder verkleinerten Kettfadenabstand -vorzugsweise unabhängig von den übrigen Teilscharen- geführt wird,
daß die Teilscharen in ihren Rand- und Zwischenbereichen durch den über die gesamte Kettfaden-Scharbreite - vorzugsweise durch Greifer oder Projektileingetragenen Schußfaden (101) gemeinsam abgebunden werden,
daß die Teilscharen in dem mittleren Bereich der jeweiligen Teilscharbreite jedoch abwechselnd zu einem Fach geöffnet werden, wobei der Schußfaden (101) abwechselnd die obere und die untere Kettfaden-Schicht der jeweiligen Teilschar zu einer Gewebelage abbindet.

8. Webverfahren nach Anspruch 7
**dadurch gekennzeichnet, daß**
die Kettfaden-Teilscharen hinsichtlich ihres Kettfaden-Abstandes unabhängig von einander derart gegensätzlich änderbar sind, sodaß vorzugsweise die Gesamtbreite benachbarter Teilscharen im wesentlichen konstant bleibt.

9. Webverfahren nach einem der Ansprüche 7 oder 8
**dadurch gekennzeichnet, daß**
daß die Teilscharen längs ihrer Zwischenbereiche, in denen die Kettfäden (2) durch den eingetragenen Schußfaden (101) gemeinsam abgebunden werden, nach dem Weben zerschnitten werden.

10. Webverfahren nach einem der Ansprüche 6 bis 9
**dadurch gekennzeichnet, daß**
die Rand- und Zwischenbereiche der Gewebebreite, welche durch den Schußfaden (101) gemeinsam abgebunden werden, besonders verstärkt und gesichert sind, insbesondere durch eine verstärkende Kantenbindung. Dreherbindung, durch Verwenden thermoplastischer Fäden, die in den Rand- und Zwischenbereichen verschmolzen werden, durch Verkleben oder durch Vernähen in Längsrichtung, wobei vorzugsweise an der Webmaschine in den Rand- bzw. Zwischenbereichen je eine Vorrichtung zum Verstärken angebracht ist, und die Position einer jeden Vorrichtung laufend der Änderung des Kettfadenabstandes angepaßt wird.

11. Webverfahren nach einem der Ansprüche 1 bis 4
**dadurch gekennzeichnet, daß**
zwei Kettfaden-Schichten übereinanderliegend geführt und abwechselnd zu einem Fach geöffnet werden,
daß der Schußfaden (101) dabei ungeschnitten durch Schußnadel geführt wird und abwechselnd die obere und die untere Kettfaden-Schicht zu einer Gewebelage abbindet und die Gewebelagen in ihrem einen Randbereiche ohne Naht verbindet,
daß der Schußfaden (101) in dem anderen Randbereich Schlaufen beim Abbinden jeweils der oberen und der unteren Kettfaden-Schicht bildet,
daß die Schlaufen durch eine in diesem anderen Randbereich angeordnete Vorrichtung zur Maschenbildung, z.B. Häkel- oder Strickvorrichtung, mit sich selbst oder mittels Hilfsfaden zu einer durch Maschen gebildeten Maschennaht verbunden werden,
daß dadurch die obere und die untere Kettfaden-Schicht zu einem gewebten Schlauch mit einseitiger Maschennaht verbunden werden, und
daß die Position der Vorrichtung zur Maschenbildung sowie der Weg der Schußnadel laufend der Änderung des Kettfadenabstandes angepaßt wird.

12. Webverfahren nach Anspruch 11
**dadurch gekennzeichnet, daß**
den Randbereich der Gewebebreite, in welchem die Gewebeschichten durch Häkelkante verbunden sind, zusätzlich verstärkt und gesichert sind, insbesondere durch eine verstärkende Kantenbindung, Dreherbindung, durch Verwenden thermoplastischer Fäden, die in dem Randbereich verschmolzen werden, durch Verkleben oder durch Vernähen in Längsrichtung,
wobei vorzugsweise an der Webmaschine in dem Randbereich eine Vorrichtung zum Verstärken angebracht ist, und die Position der Vorrichtung laufend der Änderung des Kettfadenabstandes angepaßt wird.

13. Webverfahren nach einem der Ansprüche 1 bis 12
**dadurch gekennzeichnet, daß**
die Kettfäden (2) über die Gewebebreite mit unterschiedlicher Geschwindigkeit abgezogen werden, wobei vorzugsweise die Abzugsgeschwindigkeiten für die einzelnen Kettfäden (2) oder Gruppen von Kettfäden (2) unabhängig von einander und variabel steuerbar sind.

14. Webverfahren nach einem der Ansprüche 1 bis 13
**dadurch gekennzeichnet, daß**
zur Erzeugung der veränderlichen Breite die bindungstechnische Einbindung der Kettfäden (2) durch Herausnahme bzw. die Hinzunahme von Kettfäden (2) in die Bindung steuerbar ist

15. Webverfahren nach einem der Ansprüche 1 bis 14
**dadurch gekennzeichnet, daß**
zur Erzeugung der veränderlichen Breite die Schußfadenspannung steuerbar ist.

16. Webverfahren nach einem der Ansprüche 1 bis 15
**dadurch gekennzeichnet, daß**
die Spreizung bzw. Einschnürung durch ein Riet (7) mit variablem Stababstand steuerbar ist.

17. Webmaschine, welche vor ihrer Abzugswalze ein Riet (7) besitzt, dessen Stababstand zur Vergrößerung und Spreizung sowie zur Verkleinerung und Einschnürung des Kettfadenabstandes steuerbar ist,
**dadurch gekennzeichnet, daß**
hinter dem Anschlag des Schußfadens (101) Breithalter (19) angeordnet sind, deren Breitführungswirkung beim Führen der Gewebelängsränder des Gewebes synchron mit und im wesentlichen proportional zu der Spreizung bzw. Einschnürung des Kettfadenabstandes steuerbar ist, und daß die Rietstäbe (8) im Querschnitt im wesentlichen elliptisch geformt sind.

18. Webmaschine welche vor ihrer Abzugswalze ein Riet (7) besitzt, dessen Stababstand zur Vergrößerung (Spreizung) und Verkleinerung (Einschnürung) des Kettfadenabstandes steuerbar ist,
**dadurch gekennzeichnet, daß**
hinter dem Anschlag des Schußfadens Breithalter (19) angeordnet sind, deren Breitführungswirkung beim Führen der Gewebetängsränder des Gewebes synchron mit und im wesentlichen proportional zu der Spreizung bzw. Einschnürung des Kettfadenabstandes steuerbar ist, und
daß die Rietstäbe (8) gerade Stäbe sind, die um ihre Längsachse drehbar gelagert sind.

19. Webmaschine welche vor ihrer Abzugswalze ein Riet (7) besitzt, dessen Stababstand zur Vergrößerung und Spreizung sowie zur Verkleinerung und Einschnürung des Kettfadenabstandes steuerbar ist,
**dadurch gekennzeichnet, daß**
hinter dem Anschlag des Schußfadens Breithalter (19) angeordnet sind, deren Breitführungswirkung beim Führen der Gewebelängsränder des Gewebes synchron mit und im wesentlichen proportional zu der Spreizung bzw. Einschnürung des Kettfadenabstandes steuerbar ist, und daß
das Riet (7) zur Spreizung bzw. Verdichtung der Kettfäden (2) nichtparallele Hauptrietstäbe (8) besitzt und vertikal verstellbar ist
und daß im Höhenbereich mit vergrößerten Abstand zwischen den Rietstäben zusätzliche Zusatz-Rietstäbe (8.1) angeordnet sind, in deren Zwischenräume die zwischen den Rietstäben (8) geführten Kettfäden (2) im wesentlichen gleichmäßig verteilt werden und welche im Höhenbereich der engsten Einschnürung auf derselben Radialebene zur Abzugswalze wie die Rietstäbe (8) und dadurch keine Führungsfunktion haben, im Höhenbereich der Spreizung jedoch zwischen diesen Radialebenen liegen und sich im Höhenbereich der größten Aufspreizung auf den Zwischenraum zwischen benachbarten Rietstäben im wesentlichen gleichmäßig verteilen, wobei die Zusatzstäbe (8.1) an demselben Riet (7) oder an einem Zusatzriet (7.1) angebracht sind.

20. Webmaschine nach Anspruch 19
**dadurch gekennzeichnet, daß**
die Zusatz-Rietstäbe an einem Zusatzriet (7.1) angebracht sind,
daß die Rietstäbe (8) der Riete deckungsgleich ausgerichtet sind,
daß das Riet (7) und das Zusatzriet (7.1) mit Abstand in Entstehungsrichtung des Gewebes hinter einander angeordnet und synchron in der Höhe verstellbar sind, und daß das Zusatzriet (7.1) synchron mit der Höhenverstellung im Sinne vergrößerter Spreizung seitlich um weniger als eine Rietstab-Teilung versetzbar ist.

## Claims

1. A weaving method wherein, for producing a fabric (12) having a varying width along the length thereof, the weft thread sheet in the region of the weaving shed is guided with an increased or decreased warp thread distance corresponding to the desired width of fabric,
**characterized in that** the fabric at least on its two fabric longitudinal edges and preferably immediately after the beat-up of the weft thread (9,10) is guided by spreaders (19) whose width guiding effect is controllable synchronously with and substantially proportionately to the enlargement and spreading as well as reduction and contraction of the warp thread distance.

2. The weaving method according to claim 1,
**characterized in that**
the spreaders (19) engage only the edge of the fabric and that the spreader distance is controlled synchronously with and proportionately to the enlargement and reduction of the warp thread distance, the spreaders (19) used being particularly needle-equipped cylinder spreaders, pairs of clamping rollers and non-rotating stationary dents via which the fabric (12) is guided by its edge regions in a contacting manner immediately after the beat-up of the weft thread and which in the contact region of the fabric are provided with guide grooves extending obliquely outward relative to the pull-off direction.

3. The weaving method according to claim 1,
**characterized in that**
the spreaders (19) are dents extending across the complete fabric width, that a plurality of dents with a different and particularly opposite spreading effect from dent to dent are provided, and
that the dents are alternately movable, synchronously and corresponding to the spreading or contraction of the warp thread distance, into operating positions, such that the width guiding effect in the contacting region of the fabric corresponds to the spreading or contraction, particularly dents with guide grooves which in the generating direction are facing outward with a different inclination from dent to dent, non-rotating or rotatable rollers having differently concave and/or convex outer faces from roller to roller.

4. The weaving method according to any one of claims 1 to 3,
**characterized in that**
the fabric (12) is produced by a binding wherein a plurality of, and preferably more than two, immediately adjacent warp threads (2) bind in the same manner, e.g. in a longitudinal filling rep with 4 warp ascents and 4 warp descents.

5. The weaving method according to any one of claims 1 to 4,
**characterized in that**
two warp thread layers are guided while mutually overlying and are opened alternately into a shed,
that, in the process, the uncut weft thread (101) is guided through shuttles and alternately binds the upper and the lower warp thread layer into a fabric layer (20,28) and connects the fabric layers in their edge regions in a seamless manner to form a woven hose.

6. The weaving method according to any one of claims 1 to 4,
**characterized in that**
two warp thread layers are guided while mutually overlying, with the warp thread layers in the edge regions of the fabric width being jointly bound by the weft thread (101) but being opened alternately into a shed in the central region of the fabric width, the weft thread (101) being inserted by gripper means and alternately binding the upper and the lower warp thread layer into a fabric layer.

7. The weaving method according to claim 6,
**characterized in that**
the warp thread sheet is divided into a plurality of partial sheets, that each warp thread partial sheet in the region of the weaving shed is guided with an enlarged or reduced warp thread distance corresponding to the desired fabric width, preferably independently of the other partial sheets,
that the partial sheets in their edge and intermediate regions are jointly bound by the weft thread (101) inserted - preferably by gripper means or projectiles - across the whole width of the warp thread sheet,
that, however, the partial sheets in the central region of the respective partial sheet width are alternately opened into a shed, with the weft thread (101) alternately binding the upper and the lower warp thread layer of the respective partial sheet into a fabric layer.

8. The weaving method according to claim 7,
**characterized in that**
the warp thread partial sheets with respect to their warp thread distance can be changed independently of each other in such a mutually different manner that preferably the total width of adjacent partial sheets remains substantially constant.

9. The weaving method according to any one of claims 7 or 8,
**characterized in that**
the partial sheets along their intermediate regions where the warp threads (2) are jointly bound by the inserted weft thread (101), are cut after weaving.

10. The weaving method according to any one of claims 6 to 9,
**characterized in that**
the edge and intermediate regions of the fabric width which are jointly bound by the weft thread (101), are especially reinforced and secured, particularly by a reinforcing edge formation, cross weave, use of thermoplastic threads to be molten in the edge and intermediate regions, bonding or stitching in the longitudinal direction, wherein, preferably, the weaving machine in the edge and intermediate regions is provided with a respective device for reinforcing, and the position of each device is continuously adapted to the change of the warp thread distance.

11. The weaving method according to any one of claims 1 to 4,
**characterized in that**
two warp thread layers are guided while mutually overlying and are opened alternately into a shed,
that, in the process, the uncut weft thread (101) is guided through a weft needle and alternately binds the upper and the lower warp thread layer into a fabric layer and connects the fabric layers in one of their edge regions in a seamless manner,
that the weft thread (101) in the other edge region forms loops when binding respectively the upper and the lower warp thread layer,
that the loops are connected to themselves by a device for stitch formation, e.g. a crochet or knitting device, arranged in this other edge region or are connected by means of an auxiliary thread into a stitch seam formed by stitches,
that thereby the upper and the lower warp thread layer are connected into a woven hose with one-sided stitch seam,
and that the position of the device for stitch formation and the path of the weft needle are continuously adapted to the change of the warp thread distance.

12. The weaving method according to claim 11,
**characterized in that**
the edge region of the fabric width where the fabric layers are connected by a crochet edge, is additionally reinforced and secured, particularly by a reinforcing edge formation, cross weave, use of thermoplastic threads to be molten in the edge region, bonding or stitching in the longitudinal direction, wherein, preferably, the weaving machine in the edge region is provided with a device for reinforcing, and the position of the device is continuously adapted to the change of the warp thread distance.

13. The weaving method according to any one of claims 1 to 12,
**characterized in that**
the warp threads (2) are drawn off with a varying speed across the fabric width, with the draw-off speeds for the individual warp threads (2) or groups of warp threads (2) being preferably controllable independently of each other and in a variable manner.

14. The weaving method according to any one of claims 1 to 13,
**characterized in that**,
for generating the variable width, the mechanical binding of the warp threads (2) is controllable by removal and respectively inclusion of warp threads (2) into the binding.

15. The weaving method according to any one of claims 1 to 14,
**characterized in that**,
for generating the variable width, the weft thread tension is controllable.

16. The weaving method according to any one of claims 1 to 15,
**characterized in that**
the spreading and contraction, respectively, is controllable by a reed (7) with variable dent distance.

17. A weaving machine provided with a reed (7) before its take-off roller, with the dent distance of the reed being controllable for enlargement and spreading as well as reduction and contraction of the warp thread distance,
**characterized in that**,
behind the beat-up of the weft thread (101), spreaders (19) are arranged whose width guiding effect during the guidance of the fabric longitudinal edges of the fabric is controllable synchronously with and substantially proportionately to the spreading and respectively contraction of the warp thread distance, and that the reed dents (8) have a substantially elliptical cross section.

18. A weaving machine provided with a reed (7) before its take-off roller, with the dent distance of the reed being controllable for enlargement (spreading) and reduction (contraction) of the warp thread distance,
**characterized in that**,
behind the beat-up of the weft thread, spreaders (19) are arranged whose width guiding effect during the guidance of the fabric longitudinal edges of the fabric is controllable synchronously with and substantially proportionately to the spreading and respectively contraction of the warp thread distance, and
that the reed dents (8) are linear dents supported for rotation about their longitudinal axes.

19. A weaving machine provided with a reed (7) before its take-off roller, with the dent distance of the reed being controllable for enlargement and spreading as well as reduction and contraction of the warp thread distance,
**characterized in that**,
behind the beat-up of the weft thread, spreaders (19) are arranged whose width guiding effect during the guidance of the fabric longitudinal edges of the fabric is controllable synchronously with and substantially proportionately to the spreading and respectively contraction of the warp thread distance, and that,
for the spreading and respectively contraction of the warp threads (2), the reed (7) is provided with non-parallel main reed dents (8) and is vertically adjustable,
and that, in the height region, with increased distance between the reed dents, further additional reed dents (8.1) are arranged in whose interspaces the warp threads (2) guided between the reed dents (8) are distributed in a substantially uniform manner and which in the height region of the closest contraction are arranged on the same radial plane relative to the take-off roller as the reed dents (8) and thus have no guiding function, but in the height region of the spreading are arranged between these radial planes and in the height region of the largest spreading are distributed in a substantially uniform manner in the interspace between adjacent reed dents, with the additional dents (8.1) being arranged on the same reed (7) or on an additional reed (7.1).

20. The weaving machine according to claim 19,
**characterized in that**
the additional reed dents are arranged on an additional reed (7.1),
that the reed dents (8) of the reeds are oriented in congruence,
that the reed (7) and the additional reed (7.1) are arranged at a distance behind each other in the direction of the generation of the fabric and are synchronously adjustable in height,
and that the additional reed (7.1) can be laterally displaced in the sense of an enlarged spreading in synchronism with the height adjustment by less than one reed dent pitch.

## Revendications

1. Procédé de tissage dans lequel, pour fabriquer un tissu (12) ayant une largeur variable sur toute sa longueur, la nappe de fils de trame dans la région de la foule de tissage est guidée sur une distance entre fils de chaîne accrue ou réduite correspondant à la largeur de tissu souhaitée,
**caractérisé en ce que** le tissu, au moins sur ses deux bords de tissu longitudinaux et de préférence immédiatement après la frappe du fil de trame (9, 10), est guidé par des étaleurs (19) dont l'effet de guidage de la largeur peut être commandé de manière synchronisée avec et sensiblement proportionnelle à l'élargissement et à l'étalage ainsi qu'à la réduction et au rétrécissement de la distance entre fils de chaîne.

2. Procédé de tissage selon la revendication 1, **caractérisé en ce que** :
les étaleurs (19) viennent uniquement en prise avec le bord du tissu et **en ce que** la distance de l'étaleur est commandée de manière synchronisée avec et proportionnelle à l'élargissement et à la réduction de la distance entre fils de chaîne, les étaleurs (19) utilisés étant notamment des étaleurs à tambour équipées d'aiguilles, des paires de rouleaux pinceurs et des dents stationnaires non rotatives par l'intermédiaire desquelles le tissu (12) est guidé par ses régions de bord de manière à entrer en contact immédiatement après la frappe du fil de trame et qui, dans la région de contact du tissu, sont munies de rainures de guidage s'étendant à l'oblique vers l'extérieur par rapport à la direction de décrochage.

3. Procédé de tissage selon la revendication 1, **caractérisé en ce que** :
les étaleurs (19) sont des dents s'étendant sur la largeur totale du tissu, **en ce qu'**une pluralité de dents présentant un effet d'étalage différent et, plus particulièrement, opposé d'une dent à l'autre sont prévues, et
**en ce que** les dents peuvent se déplacer de manière alternée, synchronisée et correspondent à l'étalage ainsi qu'au rétrécissement de la distance entre fils de chaîne, dans des positions de fonctionnement, de telle sorte que l'effet de guidage de la largeur dans la région de mise en contact du tissu corresponde à l'étalage ou au rétrécissement, en particulier des dents avec des rainures de guidage qui, dans le sens de production, sont dirigées vers l'extérieur avec une inclinaison différente d'une dent à l'autre, des rouleaux non rotatifs ou rotatifs ayant des faces extérieures différemment concaves et/ou convexes d'un rouleau à l'autre.

4. Procédé de tissage selon l'une quelconque des revendications 1 à 3, **caractérisé en ce que** :
le tissu (12) est fabriqué grâce à un liage dans lequel une pluralité de, et de préférence plus de deux, fils de chaîne (2) immédiatement adjacents se lient de la même manière, par exemple dans un reps en trame longitudinal avec 4 montées de chaîne et 4 descentes de chaîne.

5. Procédé de tissage selon l'une quelconque des revendications 1 à 4, **caractérisé en ce que** :
deux couches de fils de chaîne sont guidées tout en se chevauchant l'une l'autre et s'ouvrent de manière alternée dans une foule,
**en ce que**, lors du processus, le fil de trame non ouvré (101) est guidé à travers des navettes et se lie de manière alternée avec la couche de fils de chaîne supérieure et la couche de fils de chaîne inférieure pour donner une couche de tissu (20, 28) et relie sans couture les couches de tissu dans leurs régions de bord afin de former un article chaussant tissé.

6. Procédé de tissage selon l'une quelconque des revendications 1 à 4, **caractérisé en ce que** :
deux couches de fils de chaîne sont guidées tout en se chevauchant l'une l'autre, les couches de fils de chaîne dans les régions de bord de la largeur de tissu étant liées ensemble par le fil de trame (101) mais s'ouvrant de manière alternée dans une foule dans la région centrale de la largeur du tissu, le fil de trame (101) étant inséré par des moyens pinceurs et se liant de manière alternée avec la couche de fils de chaîne supérieure et la couche de fils de chaîne inférieure pour donner une couche de tissu.

7. Procédé de tissage selon la revendication 6, **caractérisé en ce que** :
la nappe de fils de chaîne est divisée en une pluralité de nappes partielles, **en ce que** chaque nappe partielle de fils de chaîne dans la région de la foule de tissage est guidée sur une distance entre fils de chaîne élargie ou réduite correspondant à la largeur de tissu souhaitée, de préférence indépendamment des autres nappes partielles,
**en ce que** les nappes partielles dans leurs régions de bord ou intermédiaires sont liées ensemble par le fil de trame (101) inséré -de préférence à l'aide de moyens pinceurs ou de projectiles- sur toute la largeur de la nappe de fils de chaîne,
**en ce que**, toutefois, les nappes partielles dans la région centrale de la largeur de nappe partielle respective s'ouvrent en alternance dans une foule, le fil de trame (101) se liant de manière alternée avec la couche de fils de chaîne supérieure et la couche de fils de chaîne inférieure de la nappe partielle respective pour donner une couche de tissu.

8. Procédé de tissage selon la revendication 7, **caractérisé en ce que** :
les nappes partielles de fils de chaîne, par rapport à leur distance entre fils de chaîne, peuvent être modifiées indépendamment l'une de l'autre de manière réciproquement différente si bien que la largeur totale des nappes partielles adjacentes reste sensiblement constante.

9. Procédé de tissage selon la revendication 7 ou 8, **caractérisé en ce que** :
les nappes partielles le long de leurs régions intermédiaires où les fils de chaîne (2) sont liés ensemble au moyen du fil de trame inséré (101) sont découpées suite au tissage.

10. Procédé de tissage selon l'une quelconque des revendications 6 à 9, **caractérisé en ce que** :
les régions de bord et intermédiaires de la largeur de tissu qui sont liées ensemble par le fil de trame (101) sont spécialement renforcées et fixées, notamment à l'aide d'une création de bord de renforcement, d'un tissage à chaîne croisé, de l'utilisation de fils thermoplastiques qui doivent être fondus dans les régions de bord et intermédiaires, en effectuant une liaison ou une piqûre dans le sens longitudinal où, de préférence, la machine à tisser dans les régions de bord et intermédiaires est dotée d'un dispositif respectif pour le renforcement, et la position de chaque dispositif est adaptée continuellement à la variation de la distance entre fils de chaîne.

11. Procédé de tissage selon l'une quelconque des revendications 1 à 4, **caractérisé en ce que** :
deux couches de fils de chaîne sont guidées tout en se chevauchant l'une l'autre et s'ouvrent de manière alternée dans une foule,
**en ce que**, lors du processus, le fil de trame non ouvré (101) est guidé à travers une aiguille à insérer la trame et se lie de manière alternée avec la couche de fils de chaîne supérieure et la couche de fils de chaîne inférieure pour donner une couche de tissu et relie sans couture les couches de tissu dans l'une de leurs régions de bord,
**en ce que** le fil de trame (101) dans l'autre région de bord forme des boucles lors de la liaison respective avec la couche de fils de chaîne supérieure et la couche de fils de chaîne inférieure,
**en ce que** les boucles sont reliées entre elles par un dispositif servant à créer des piqûres, par exemple ou un appareil servant à faire du crochet ou du tricot, disposé dans cette autre région de bord ou sont reliées au moyen d'un fil auxiliaire pour donner une couture piquée formée par les piqûres,
**en ce que**, par ce moyen, la couche de fils de chaîne supérieure et la couche de fils de chaîne inférieure sont reliées pour donner un article chaussant doté d'une couture piquée unilatérale,
et **en ce que** la position du dispositif servant à la création de piqûres et la trajectoire de l'aiguille de trame sont continuellement adaptées à la variation de la distance entre fils de chaîne.

12. Procédé de tissage selon la revendication 11, **caractérisé en ce que** :
la région de bord de la largeur de tissu où les couches de tissu sont reliées par un bord crocheté, est renforcée et fixée de manière supplémentaire, notamment grâce à la création d'un bord de renforcement, d'un tissage à chaîne croisé, de l'utilisation de films thermoplastiques qui doivent être fondus dans la région de bord, en effectuant une liaison ou une piqûre dans le sens longitudinal, où, de préférence, la machine à tisser dans la région de bord est dotée d'un dispositif servant au renforcement, et la position du dispositif est continuellement adaptée à la variation de la distance entre fils de chaîne.

13. Procédé de tissage selon l'une quelconque des revendications 1 à 12, **caractérisé en ce que** :
les fils de chaîne (2) sont tirés à une vitesse variable sur la largeur du tissu, les vitesses de tirage pour les fils de chaîne individuels (2) ou des groupes de fils de chaîne (2) pouvant de préférence être commandées indépendamment les unes des autres et de manière variable.

14. Procédé de tissage selon l'une quelconque des revendications 1 à 13, **caractérisé en ce que** :
pour créer la largeur variable, le liage mécanique des fils de chaîne (2) peut être commandé par le retrait et respectivement l'inclusion de fils de chaîne (2) dans le liage.

15. Procédé de tissage selon l'une quelconque des revendications 1 à 14, **caractérisé en ce que** :
pour créer la largeur variable, la tension des fils de trame peut être commandée.

16. Procédé de tissage selon l'une quelconque des revendications 1 à 15, **caractérisé en ce que** :
l'étalage et le rétrécissement, respectivement, peuvent être commandés par un peigne (7) ayant une distance entre les dents variable.

17. Machine à tisser dotée d'un peigne (7) avant son rouleau de prélèvement, la distance entre les dents du peigne pouvant être commandée en vue de l'élargissement et de l'étalage ainsi que de la réduction et du rétrécissement de la distance entre fils de chaîne, **caractérisée en ce que** :
derrière la frappe du fil de trame (101) sont disposés des étaleurs (19) dont l'effet de guidage de la largeur lors du guidage des bords longitudinaux du tissu peut être commandé de manière synchronisée avec et sensiblement proportionnelle à l'étalage et respectivement au rétrécissement de la distance entre fils de chaîne, et **en ce que** les dents du peigne (8) présentent une section transversale sensiblement elliptique.

18. Machine à tisser doté d'un peigne (7) avant son rouleau de prélèvement, la distance entre les dents du peigne pouvant être commandée en vue d'un élargissement (étalage) ou d'une réduction (rétrécissement) de la distance entre fils de chaîne, **caractérisée en ce que** :
derrière la frappe du fil de trame sont disposés des étaleurs (19) dont l'effet de guidage de la largeur lors du guidage des bords longitudinaux du tissu peut être commandé de manière synchronisée avec et sensiblement proportionnelle à l'étalage et respectivement au rétrécissement de la distance entre fils de chaîne, et
**en ce que** les dents du peigne (8) sont des dents linéaires supportées afin de tourner autour de leurs axes longitudinaux.

19. Machine à tisser dotée d'un peigne (7) avant son rouleau de prélèvement, la distance entre les dents du peigne pouvant être commandée en vue de l'élargissement et de l'étalage ainsi que de la réduction et du rétrécissement de la distance entre fils de chaîne, **caractérisée en ce que** :
derrière la frappe du fil de trame sont disposés des étaleurs (19) dont l'effet de guidage de la largeur lors du guidage des bords longitudinaux du tissu peut être commandé de manière synchronisée avec et sensiblement proportionnelle à l'étalage et respectivement au rétrécissement de la distance entre fils de chaîne, et **en ce que**
pour l'étalage et respectivement le rétrécissement des fils de chaîne (2), le peigne (7) est doté de dents de peigne principales non parallèles (8) et peut être ajusté à la verticale,
et **en ce que**, dans la région de la hauteur, grâce à une distance accrue entre les dents du peigne, d'autres dents de peigne supplémentaires (8.1) sont disposées dans les intervalles desquels les fils de chaîne (2) guidés entre les dents du peigne (8) sont répartis de manière sensiblement uniforme et qui, dans la région de la hauteur du rétrécissement maximal, sont disposées sur le même plan radial par rapport au rouleau de prélèvement que les dents du peigne (8) et n'ont ainsi aucune fonction de guidage, mais qui, dans la région de la hauteur de l'étalage, sont disposées entre ces plans radiaux et, dans la région de la hauteur de l'étalage le plus grand, sont réparties de manière sensiblement uniforme dans l'intervalle situé entre des dents adjacentes, les dents supplémentaires (8.1) étant disposées sur le même peigne (7) ou sur un peigne supplémentaire (7.1).

20. Machine à tisser selon la revendication 19, **caractérisée en ce que** :
les dents du peigne supplémentaires sont disposées sur un peigne supplémentaire (7.1),
**en ce que** les dents du peigne (8) des peignes sont orientées en congruence,
**en ce que** le peigne (7) et le peigne supplémentaire (7.1) sont disposés à une certaine distance l'un de l'autre dans le sens de production du tissu et peuvent être ajustés dans le sens de la hauteur de manière synchronisée,
et **en ce que** le peigne supplémentaire (7.1) peut être latéralement déplacé dans le sens d'un étalage agrandi en synchronisation avec le réglage de la hauteur sur moins d'un pas de dent de peigne.
